# EUROPEAN PATENT APPLICATION

(11) **EP 4 844 026 A1**
(43) Date of publication of application: **25.11.2026**
(21) Application number: 25741942.4
(22) Date of filing: 15.01.2025
(51) Int. Cl.: C08L 69/00, C08G 64/18, C08K 3/013, C08K 3/016, C08K 3/36, C08K 7/06, C08K 7/28, C08L 33/02, C08L 33/06, C08L 33/18, C08L 51/04

(54) **POLYCARBONATE-BASED RESIN COMPOSITION AND MOLDED ARTICLE THEREOF**

(30) Priority: 17.01.2024 JP 2024005236
(71) Applicant: Idemitsu Kosan Co.,Ltd., Tokyo 100-8321 (JP)
(72) Inventor: MIYANE Satoshi, Tokyo 100-8321 (JP); KUBO Masahiro, Tokyo 100-8321 (JP); YABUKAMI Minoru, Tokyo 100-8321 (JP); KAKO Atsushi, Tokyo 100-8321 (JP); SASAKI Hiroshi, Tokyo 100-8321 (JP)
(74) Representative: Hoffmann Eitle
(86) International application number: PCT/JP2025/000938
(87) International publication number: WO 2025/154717

(57) **Abstract**

Provided are a polycarbonate-based resin composition and a molded article thereof that are each excellent in balance between its impact resistance and scratch resistance, using a polycarbonate-based resin composition, including: a polycarbonate-based resin (S) containing a polycarbonate-polyorganosiloxane copolymer (A); and at least one kind selected from the group consisting of: a light resistance agent; an elastomer; a colorant; an effect pigment particle; an inorganic filler; a flame retardant; and an acrylic resin, wherein the resin (S) includes a polycarbonate block including a structural unit (A-1) represented by a formula (1) and a polyorganosiloxane block including a repeating structure (A-2) of a structure represented by a formula (XX), wherein a content of the structural unit (A-1) in the resin (S) is 78.0 mass% or more, and wherein a content of a structural unit represented by the formula (XX) in the resin (S) is 2.0 mass% or more and 25.0 mass% or less.

## Description

### Technical Field

The present invention relates to a polycarbonate-based resin composition and a molded article thereof.

### Background Art

A polycarbonate resin has been known to be excellent in properties, such as transparency, impact resistance, and flame retardancy. Accordingly, the polycarbonate resin has been expected to be widely utilized in various fields, such as the field of electrical and electronic equipment and the field of automobiles.

In recent years, there has been a demand for the development of a polycarbonate resin using, as a raw material, a plant-derived monomer from the viewpoint of carbon neutrality. A polycarbonate resin produced by using isosorbide, which is a plant-derived raw material, has been developed as such polycarbonate resin (see, for example, PTL 1).

In PTL 1, for the purpose of providing a polycarbonate resin that is excellent in hue and thermal stability, and is excellent in flexibility, and a polycarbonate resin composition obtained by using the polycarbonate resin, the composition being excellent in impact resistance and heat resistance, there are descriptions of a polycarbonate resin using a compound produced from a plant-derived raw material, the resin being excellent in flexibility, and also excellent in hue and thermal stability, and a polycarbonate resin composition using the polycarbonate resin as an impact modifier, the composition having a high degree of biomass, and being excellent in impact resistance and heat resistance.

### Citation List

### Patent Literature

PTL 1: JP 2021-91900 A

### Summary of Invention

### Technical Problem

According to investigations made by the inventors of the present invention, for example, it has been revealed that the polycarbonate composition described in PTL 1 has room for improvement in impact resistance.

In addition, a substance having a high hardness generally tends to be brittle, and hence it is difficult to achieve both impact resistance and scratch resistance. However, in a molded body using a polycarbonate resin, it has been required to achieve both of those kinds of performance.

The present invention has been made in view of the above-mentioned circumstances, and provides a polycarbonate-based resin composition that can exhibit the effect of an additional functional component, and provide a molded article excellent in balance between its impact resistance and scratch resistance.

### Solution to Problem

The inventors of the present invention have found that a polycarbonate-based resin composition including a specific structural unit can exhibit the effect of a additional functional component, and provide a molded article excellent in balance between its impact resistance and scratch resistance.

That is, according to the present invention, there are provided the following polycarbonate-based resin composition and molded article.
[1] A polycarbonate-based resin composition, comprising: a polycarbonate-based resin (S) containing a polycarbonate-polyorganosiloxane copolymer (A); and at least one kind selected from the group consisting of: a light resistance agent; an elastomer; a colorant; an effect pigment particle; an inorganic filler; a flame retardant; and an acrylic resin, wherein the polycarbonate-based resin (S) includes a polycarbonate block including a structural unit (A-1) represented by the following formula (1) and a polyorganosiloxane block including a repeating structure (A-2) of a structure represented by the following formula (XX), wherein a content of the structural unit (A-1) represented by the formula (1) in the polycarbonate-based resin (S) is 78.0 mass% or more, and wherein a content of a structural unit represented by the following formula (XX) in the polycarbonate-based resin (S) is 2.0 mass% or more and 25.0 mass% or less: 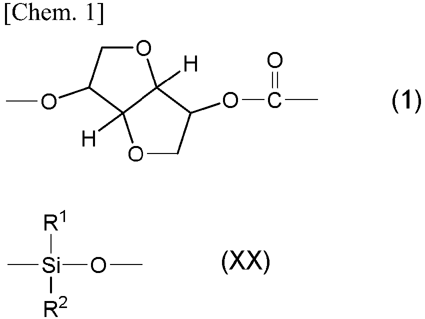 wherein
   in the formula (XX), R¹ and R² each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms.
[2] The polycarbonate-based resin composition according to Item [1], wherein the polycarbonate-based resin (S) further includes at least one structural unit (A-3) selected from structures represented by the following formulae (3) and (4): 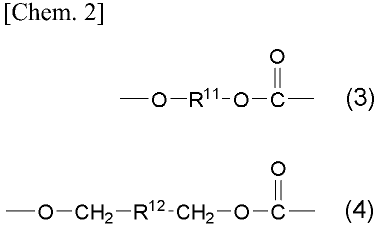 wherein
   in the formulae (3) and (4), R¹¹ represents a divalent linear or branched aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and R¹² represents a divalent alicyclic hydrocarbon group having 3 to 40 carbon atoms.
[3] The polycarbonate-based resin composition according to Item [2], wherein the structural unit (A-3) includes at least one selected from structural units (A-31) to (A-34) represented by the following formulae (31) to (34): 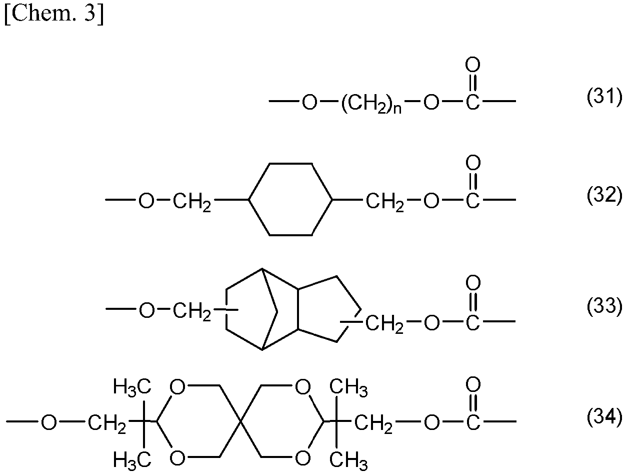 wherein
   in the formula (31), "n" represents an integer of from 2 to 18.
[4] The polycarbonate-based resin composition according to any one of Items [1] to [3], wherein the R¹ and the R² each represent a methyl group.
[5] The polycarbonate-based resin composition according to any one of Items [1] to [4], wherein the light resistance agent includes at least one kind selected from the group consisting of: a benzotriazole-based UV absorber; a benzoxazinone-based UV absorber; a salicylate-based UV absorber; a malonic acid ester-based UV absorber; an oxalylanilide-based UV absorber; a triazine-based UV absorber; a benzophenone-based UV absorber; a cyanoacrylate-based UV absorber; and an amine-based light resistance stabilizer.
[6] The polycarbonate-based resin composition according to any one of Items [1] to [4], wherein the elastomer includes at least one kind selected from the group consisting of: a rubbery graft polymer; and a rubbery graft polymer latex.
[7] The polycarbonate-based resin composition according to any one of Items [1] to [4], wherein the colorant includes at least one kind selected from the group consisting of: an inorganic pigment; an organic pigment; and an organic dye.
[8] The polycarbonate-based resin composition according to any one of Items [1] to [4], wherein the effect pigment particle includes at least one kind selected from the group consisting of particles obtained by coating, with a metal thin film, at least one kind selected from the group consisting of: a metal particle; and a light interference pigment.
[9] The polycarbonate-based resin composition according to any one of Items [1] to [4], wherein the inorganic filler includes at least one kind selected from a glass filler, silica, and a carbon fiber.
[10] The polycarbonate-based resin composition according to any one of Items [1] to [4], wherein the flame retardant includes at least one kind selected from the group consisting of: a phosphorus-based flame retardant; and a metal salt-based flame retardant.
[11] The polycarbonate-based resin composition according to any one of Items [1] to [4], wherein the acrylic resin includes at least one kind selected from the group consisting of (co)polymers of a monomer selected from the group consisting of: acrylic acid; methacrylic acid; an acrylic acid ester; a methacrylic acid ester; acrylonitrile; and methacrylonitrile.
[12] A molded article of the polycarbonate-based resin composition of any one of Items [1] to [11].

### Advantageous Effects of Invention

According to the present invention, there can be provided the polycarbonate-based resin composition that can provide a molded article excellent in balance between its impact resistance and scratch resistance.

### Description of Embodiments

A polycarbonate-based resin composition and a molded article of the polycarbonate-based resin composition according to the present invention are described in detail below. Herein, a specification considered to be preferred may be arbitrarily adopted, and a combination of preferred specifications can be said to be more preferred. The description "XX to YY" as used herein means "XX or more and YY or less."

When a plurality of lower limit values such as "x or more" exists for one technical matter, or when a plurality of upper limit values such as "y or less" exists therefor, the upper limit values and the lower limit values may be optionally selected and combined.

When a compound and a chemical structure described herein each have a plurality of stereoisomers and structural isomers, all the stereoisomers and the structural isomers are encompassed unless otherwise specified.

### 1. Polycarbonate-based Resin Composition

The polycarbonate-based resin composition according to the present invention includes: a polycarbonate-based resin (S) containing a polycarbonate-polyorganosiloxane copolymer (A); and at least one kind selected from the group consisting of: a light resistance agent; an effect pigment particle; a colorant; an inorganic filler; an elastomer; a flame retardant; and an acrylic resin.

According to the polycarbonate-based resin composition according to the present invention, a molded article excellent in balance between its impact resistance and scratch resistance can be obtained.

### [Polycarbonate-based Resin (S)]

The polycarbonate-based resin (S) contains the polycarbonate-polyorganosiloxane copolymer (A), and includes a polycarbonate block including a structural unit (A-1) represented by the following formula (1) and a polyorganosiloxane block including a repeating structure (A-2) of a structure represented by the following formula (XX).

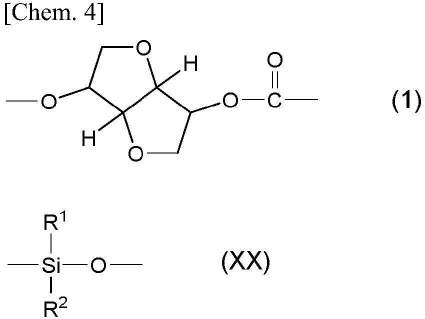

In the formula (XX), R¹ and R² each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms.

### <Polycarbonate Block>

The polycarbonate block included in the polycarbonate-based resin (S) is represented by the following formula (X) and includes the structural unit (A-1) represented by the formula (1).

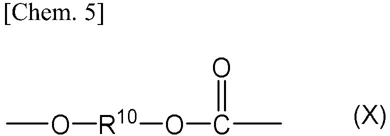

In the formula (X), R¹⁰ represents a divalent aliphatic hydrocarbon group having 2 to 40 carbon atoms, or a divalent aromatic hydrocarbon group having 6 to 20 carbon atoms, and these groups may each be substituted with a substituent, and may each contain at least one atom selected from the group consisting of: an oxygen atom; a nitrogen atom; a sulfur atom; and a halogen atom.

Herein, various "divalent" hydrocarbon groups are substituents each formed by removing two hydrogen atoms from a hydrocarbon.

The structural unit (A-1) represented by the formula (1) preferably includes a structural unit represented by the following formula (11), and is more preferably formed only of the structural unit represented by the following formula (11).

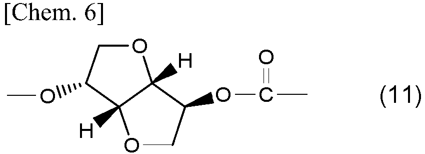

From the viewpoint of obtaining a polycarbonate-based resin composition and a molded article thereof that are each excellent in impact resistance, the content of the structural unit (A-1) represented by the formula (1) in the polycarbonate-based resin (S) according to the present invention is 78.0 mass% or more, preferably 80.0 mass% or more, more preferably 81.0 mass% or more.

For example, the term "content of the structural unit (A-1) represented by the formula (1) in the polycarbonate-based resin (S)" refers to the mass of the structural unit (A-1) represented by the formula (1) with respect to the total mass of the structural unit (A-1) represented by the formula (1) and the structural unit represented by the formula (XX), and structural units (A-31) to (A-34) represented by the following formulae (31) to (34).

A method of measuring the content of the structural unit (A-1) represented by the formula (1) in the polycarbonate-based resin (S) is not particularly limited, and an example thereof is nuclear magnetic resonance (NMR) analysis.

The polycarbonate block included in the polycarbonate-based resin (S) may further include at least one structural unit (A-3) selected from structural units represented by the following formulae (3) and (4). When the polycarbonate block includes the structural unit (A-3), the impact resistance of a molded article of the polycarbonate-based resin composition can be further improved.

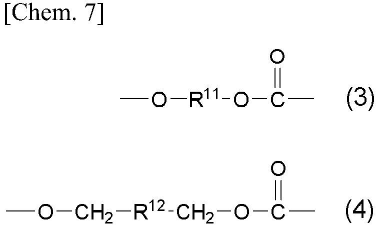

In the formula (3), R¹¹ represents a divalent linear aliphatic hydrocarbon group having 2 to 40 carbon atoms, a divalent branched aliphatic hydrocarbon group having 3 to 40 carbon atoms, a divalent alicyclic hydrocarbon group having 3 to 40 carbon atoms, or a divalent aromatic hydrocarbon group having 6 to 20 carbon atoms, and preferably represents a divalent linear aliphatic hydrocarbon group having 2 to 40 carbon atoms, a divalent branched aliphatic hydrocarbon group having 3 to 40 carbon atoms, or a divalent alicyclic hydrocarbon group having 3 to 40 carbon atoms.

In the formula (4), R¹² represents a divalent alicyclic hydrocarbon group having 3 to 40 carbon atoms, preferably represents a divalent alicyclic hydrocarbon group having 4 to 20 carbon atoms, and more preferably represents a divalent alicyclic hydrocarbon group having 5 to 15 carbon atoms.

From the viewpoint of reducing the melt flow rate of the polycarbonate-based resin (S), and from the viewpoint of increasing the tensile modulus of elasticity, tensile strength (yield), and glass transition temperature thereof, each of R¹¹ and R¹² in the formulae (3) and (4) preferably contains at least one or more carbon atoms selected from tertiary and quaternary carbon atoms, more preferably contains at least one or more carbon atoms selected from tertiary and quaternary carbon atoms, and a divalent alicyclic hydrocarbon group having 3 to 20 carbon atoms, and still more preferably contains at least one or more carbon atoms selected from tertiary and quaternary carbon atoms, and a divalent alicyclic hydrocarbon group having 3 to 8 carbon atoms. Particularly from the viewpoint of availability of a raw material, each of R¹¹ and R¹² still more preferably contains at least one or more carbon atoms selected from tertiary and quaternary carbon atoms, and a divalent alicyclic hydrocarbon group having 3 to 6 carbon atoms.

The reasons why the melt flow rate of the polycarbonate-polyorganosiloxane copolymer (A) is reduced, and the tensile modulus of elasticity, tensile strength (yield), and glass transition temperature thereof are improved, when R¹¹ and R¹² in the formulae (3) and (4) each contain at least one or more carbon atoms selected from tertiary and quaternary carbon atoms are not clear. However, it is conceivable that the tertiary and quaternary carbon atoms each have low mobility, and hence a structure containing such carbon atom is likely to become rigid.

The reasons why the melt flow rate of the polycarbonate-based resin (S) is reduced, and the tensile modulus of elasticity, tensile strength (yield), and glass transition temperature thereof are improved, when R¹¹ and R¹² in the formulae (3) and (4) each contain a divalent alicyclic hydrocarbon group having 3 to 20 carbon atoms are not clear. However, it is conceivable that molecular mobility is restricted by a cyclic structure, and hence a structure containing such group is likely to become rigid.

The structural unit (A-1) is not included in the structural unit (A-3).

The divalent linear aliphatic hydrocarbon group having 2 to 40 carbon atoms and the divalent branched aliphatic hydrocarbon group having 3 to 40 carbon atoms that are each represented by R¹¹ in the formula (3) may each be substituted with a substituent, and may each contain, in the carbon chain of the hydrocarbon group, at least one atom selected from the group consisting of: an oxygen atom; a nitrogen atom; a sulfur atom; and a halogen atom.

Examples of the divalent linear aliphatic hydrocarbon group having 2 to 40 carbon atoms or the divalent branched aliphatic hydrocarbon group having 3 to 40 carbon atoms represented by R¹¹ in the formula (3) include an ethylene group, a *n*-propylene group, an isopropylene group, a *n*-butylene group, an isobutylene group, a *n*-pentylene group, a neopentylene group, a *n*-hexylene group, a *n*-heptylene group, a *n*-octylene group, a 2-ethylhexylene group, a *n*-nonylene group, a *n*-decylene group, a *n*-undecylene group, a *n-*dodecylene group, a *n*-tridecylene group, a *n*-tetradecylene group, a *n*-pentadecylene group, a *n*-hexadecylene group, a *n*-heptadecylene group, and a *n*-octadecylene group. A *n*-propylene group, a *n*-butylene group, a *n*-pentylene group, a neopentylene group, a *n*-hexylene group, a *n*-heptylene group, a *n*-octylene group, a *n*-nonylene group, or a *n*-decylene group is preferred, and a *n*-butylene group, a *n*-pentylene group, a neopentylene group, a *n*-hexylene group, a *n-*heptylene group, or a *n*-octylene group is more preferred.

The divalent alicyclic hydrocarbon group having 3 to 40 carbon atoms represented by R¹¹ in the formula (3) may be substituted with a substituent, and may contain at least one atom selected from the group consisting of: an oxygen atom; a nitrogen atom; a sulfur atom; and a halogen atom.

Examples of the divalent alicyclic hydrocarbon group having 3 to 40 carbon atoms represented by R¹¹ in the formula (3) include a cyclopropylene group, a cyclobutylene group, a cyclopentylene group, a cyclohexylene group, a cyclooctylene group, a cyclodecylene group, a cyclotetradecylene group, an adamantylene group, a bicycloheptylene group, a bicyclodecylene group, a tricyclodecylene group, a spirobicyclohexylene group, a decahydronaphthylene group, a tricyclotetradecylene group, and a pentacyclopentadecylene group. A cyclohexylene group, a tricyclodecylene group, a pentacyclopentadecylene group, a decahydronaphthylene group, a tricyclotetradecylene group, a bicycloheptylene group, or an adamantylene group is preferred, and a cyclohexylene group or a tricyclodecylene group is more preferred.

The cyclohexylene group represented by R¹¹ in the formula (3) includes various isomers represented by the following formula (3a). Specific examples thereof include a 1,2-cyclohexylene group, a 1,3-cyclohexylene group, and a 1,4-cyclohexylene group.

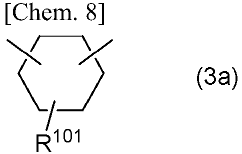

In the formula (3a), R¹⁰¹ represents a hydrogen atom or an alkyl group having 1 to 12 carbon atoms.

The tricyclodecylene group or the pentacyclopentadecylene group represented by R¹¹ in the formula (3) includes various isomers represented by the following formula (3b). n' represents 0 or 1.

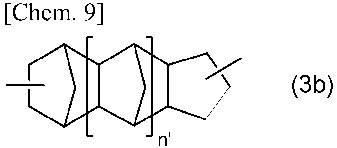

The decahydronaphthylene group or the tricyclotetradecylene group represented by R¹¹ in the formula (3) includes various isomers represented by the following formula (3c). Specific examples thereof include a 2,6-decahydronaphthylene group, a 1,5-decahydronaphthylene group, and a 2,3-decahydronaphthylene group. n" represents 0 or 1.

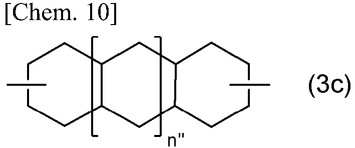

The bicycloheptylene group represented by R¹¹ in the formula (3) includes various isomers represented by the following formula (3d). Specific examples thereof include a 2,3-bicycloheptylene group and a 2,5-bicycloheptylene group.

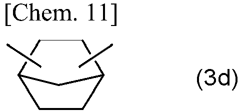

The adamantylene group represented by R¹¹ in the formula (3) includes various isomers represented by the following formula (3e). A specific example thereof is a 1,3-adamantylene group.

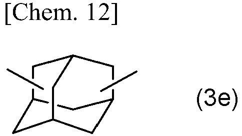

The divalent aromatic hydrocarbon group having 6 to 20 carbon atoms represented by R¹¹ in the formula (3) may be substituted with a substituent, and may contain at least one atom selected from the group consisting of: an oxygen atom; a nitrogen atom; a sulfur atom; and a halogen atom.

Examples of the divalent aromatic hydrocarbon group having 6 to 20 carbon atoms represented by R¹¹ in the formula (3) include an aromatic hydrocarbon group represented by the following formula (3f), a 1,4-phenylene group, a 1,3-phenylene group, and a 1,2-phenylene group. An aromatic hydrocarbon group represented by the following formula (3f) is preferred.

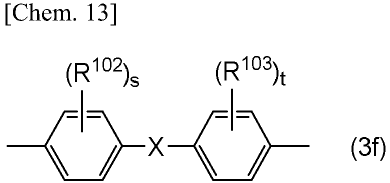

In the formula (3f), R¹⁰² and R¹⁰³ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, - SO₂-, -O-, or -CO-, and "s" and "t" each independently represent an integer of from 0 to 4.

In the formula (3f), examples of the halogen atom that R¹⁰² and R¹⁰³ each independently represent include a fluorine atom, a chlorine atom, a bromine atom, and an iodine atom.

Examples of the alkyl group that R¹⁰² and R¹⁰³ each independently represent include a methyl group, an ethyl group, a n-propyl group, an isopropyl group, various butyl groups (the term "various" means that a linear group and all kinds of branched groups are included, and the same holds true for the following), various pentyl groups, and various hexyl groups. Examples of the alkoxy group that R¹⁰² and R¹⁰³ each independently represent include alkoxy groups having the above-mentioned alkyl groups as alkyl group moieties.

Examples of the alkylene group represented by X include a methylene group, an ethylene group, a trimethylene group, a tetramethylene group, and a hexamethylene group. Among them, an alkylene group having 1 to 5 carbon atoms is preferred. Examples of the alkylidene group represented by X include an ethylidene group and an isopropylidene group. Examples of the cycloalkylene group represented by X include a cyclopentanediyl group and a cyclohexanediyl group. Among them, a cycloalkylene group having 5 to 10 carbon atoms is preferred. Examples of the arylene group represented by X include a phenylene group, a naphthylene group, and a biphenylene group. Examples of the cycloalkylidene group represented by X include a cyclohexylidene group, a 3-methylcyclohexylidene group, a 3,5,5-trimethylcyclohexylidene group, a cyclododecylidene group, and a 2-adamantylidene group. Among them, a cycloalkylidene group having 5 to 12 carbon atoms is preferred, and a cycloalkylidene group having 5 to 8 carbon atoms is more preferred. An aryl moiety of the arylalkylene group represented by X is, for example, an aryl group having 6 to 14 ring-forming carbon atoms, such as a phenyl group, a naphthyl group, a biphenyl group, or an anthryl group. An aryl moiety of the arylalkylidene group represented by X is, for example, an aryl group having 6 to 14 ring-forming carbon atoms, such as a phenyl group, a naphthyl group, a biphenyl group, or an anthryl group.

"s" and "t" each independently represent an integer of from 0 to 4, preferably from 0 to 2, more preferably 0 or 1. In particular, a repeating unit in which "s" and "t" each represent 0, and X represents a single bond or an alkylene group having 1 to 8 carbon atoms, or a repeating unit in which "s" and "t" each represent 0, and X represents an alkylidene group, in particular an isopropylidene group is suitable.

Examples of the divalent alicyclic hydrocarbon group having 3 to 40 carbon atoms represented by R¹² in the formula (4) include the same divalent alicyclic hydrocarbon groups each having 3 to 40 carbon atoms as those for R¹¹ in the formula (3). Among them, a cyclohexylene group, a tricyclodecylene group, a pentacyclopentadecylene group, a decahydronaphthylene group, a tricyclotetradecylene group, a bicycloheptylene group, or an adamantylene group is preferred, and a cyclohexylene group or a tricyclodecylene group is more preferred.

From the viewpoint of obtaining a polycarbonate-based resin composition and a molded article thereof that are each more excellent in impact resistance, the structural unit (A-3) preferably includes at least one selected from the structural units (A-31) to (A-34) represented by the following formulae (31) to (34), more preferably includes at least one selected from the structural units (A-31) to (A-33), is still more preferably at least one selected from the structural units (A-31) to (A-33), and is even still more preferably the structural unit (A-32).

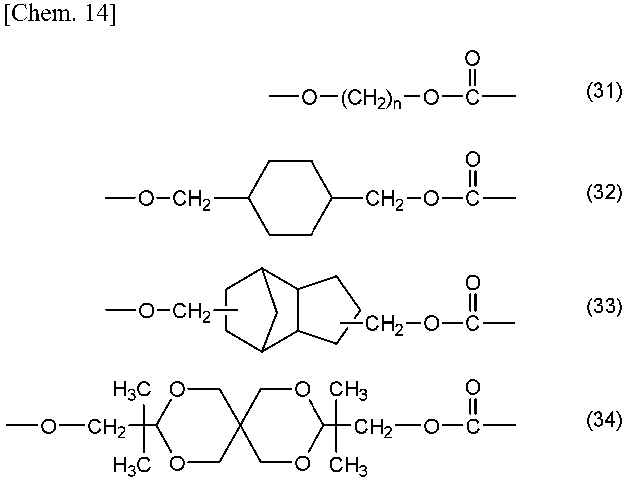

In the formula (31), "n" represents an integer of from 2 to 18, preferably from 3 to 10, more preferably from 4 to 8.

When the structural unit (A-3) includes at least one selected from the structural units (A-31) to (A-34), the total content of the structural units (A-31) to (A-34) in the structural unit (A-3) is preferably 90.0 mass% or more, more preferably 93.0 mass% or more, still more preferably 95.0 mass% or more, and is preferably 100.0 mass% or less, more preferably 100.0 mass%.

The polycarbonate block included in the polycarbonate-based resin (S) preferably includes the structural unit (A-1) represented by the formula (1) and the structural unit (A-3) represented by the formula (3), more preferably includes the structural unit (A-1) represented by the formula (1) and at least one selected from the structural units (A-31) to (A-34) represented by the formulae (31) to (34), and still more preferably includes the structural unit (A-1) represented by the formula (1) and the structural unit (A-32) represented by the formula (32).

From the viewpoint of obtaining a polycarbonate-based resin composition and a molded article thereof that are each excellent in impact resistance, the content of the structural unit (A-1) in the polycarbonate block is preferably 80.0 mol% or more, more preferably 82.0 mol% or more, still more preferably 84.0 mol% or more, and is preferably 100.0 mol% or less, more preferably 98.0 mol% or less, still more preferably 96.0 mol% or less, particularly preferably 92.0 mol% or less.

When the polycarbonate block includes the structural unit (A-3), from the viewpoint of obtaining a polycarbonate-based resin composition and a molded article thereof that are each more excellent in impact resistance, the content of the structural unit (A-3) in the polycarbonate block is preferably 1.0 mol% or more, more preferably 2.0 mol% or more, still more preferably 4.0 mol% or more, and is preferably 20.0 mol% or less, more preferably 18.0 mol% or less, still more preferably 16.0 mol% or less.

The contents of the structural unit (A-1) and the structural unit (A-3) in the polycarbonate block are calculated by nuclear magnetic resonance (NMR) measurement.

### <Polyorganosiloxane Block>

The polyorganosiloxane block included in the polycarbonate-based resin (S) includes at least the repeating structure (A-2) of the structure represented by the following formula (XX). The polyorganosiloxane block is a structural unit that is present between two polycarbonate bonds most adjacent to each other on the main chain of the polycarbonate-polyorganosiloxane copolymer (A) and includes at least one structure represented by the following formula (XX), and is preferably a repeating structure of the structure represented by the formula (XX) represented by the following formula (2).

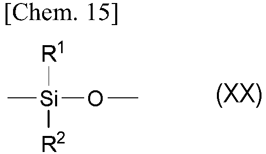

In the formula (XX), R¹ and R² each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms.

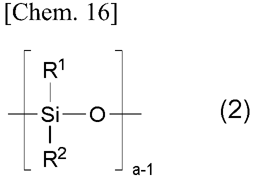

In the formula (2), R¹ and R² represent the same meanings as those of R¹ and R² in the formula (XX). a-1 represents the number of repetitions of the structure represented by the formula (XX), and "a" represents an integer of from 2 to 500.

Examples of the halogen atom represented by each of R¹ and R² in the formula (2) include a fluorine atom, a chlorine atom, a bromine atom, and an iodine atom. Examples of the alkyl group having 1 to 10 carbon atoms represented by each of R¹ and R² include a methyl group, an ethyl group, a *n*-propyl group, an isopropyl group, various butyl groups, various pentyl groups, and various hexyl groups. Examples of the alkoxy group having 1 to 10 carbon atoms represented by each of R¹ and R² include alkoxy groups whose alkyl group moieties are the same as the above-mentioned alkyl groups. Examples of the aryl group having 6 to 12 carbon atoms represented by each of R¹ and R² include a phenyl group and a naphthyl group. Examples of the alkylaryl group having 7 to 22 carbon atoms represented by each of R¹ and R² include alkylaryl groups whose alkyl group moieties are the same as the above-mentioned alkyl groups and whose aryl group moieties are the same as the above-mentioned aryl groups.

R¹ and R² each preferably represent a hydrogen atom, an alkyl group having 1 to 6 carbon atoms, an alkoxy group having 1 to 6 carbon atoms, an aryl group having 6 to 12 carbon atoms, or an arylalkyl group having 7 to 22 carbon atoms, each more preferably represent an alkyl group having 1 to 6 carbon atoms, and each still more preferably represent a methyl group.

The polyorganosiloxane block preferably has a structure represented by the following formula (21).

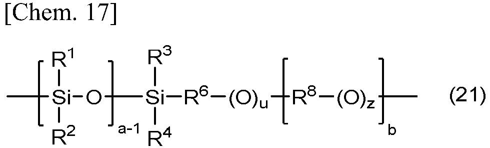

In the formula (21), R¹, R², and "a" represent the same meanings as those of R¹, R², and "a" in the formula (2). R³ and R⁴ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms. R⁶ represents an arylene group having 6 to 20 carbon atoms, an alkylene group having 1 to 10 carbon atoms, or an alkylarylene group having 7 to 22 carbon atoms, and these groups may each contain, in at least one of its main chain or a side chain thereof, at least one group selected from the group consisting of: -O-; -COO-; -CO-; -S-; -NH-; and -NR¹¹¹-. A plurality of R⁸s may be identical to or different from each other, and each represent an arylene group having 6 to 20 carbon atoms, an alkylene group having 1 to 10 carbon atoms, or an alkylarylene group having 7 to 22 carbon atoms, and these groups may each contain, in at least one of its main chain or a side chain thereof, at least one group selected from the group consisting of: -O-; - COO-; -CO-; -S-; -NH-; and -NR¹¹¹-. R¹¹¹ represents an alkyl group having 1 to 10 carbon atoms, or an aryl group having 6 to 10 carbon atoms. "a" represents an integer of from 2 to 500, and "b" represents an integer of from 2 to 200. "u" and "z" each represent 0 or 1.

In addition, the polyorganosiloxane block preferably has a structure represented by the following formula (22).

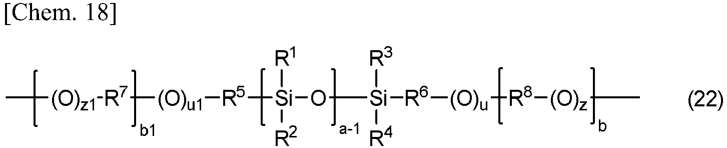

In the formula (22), R¹ to R⁴, R⁶, R⁸, "a", "b", "u", and "z" represent the same meanings as those of R¹ to R⁴, R⁶, R⁸, "a", "b", "u", and "z" in the formula (2) and the formula (21). R⁵ represents an arylene group having 6 to 20 carbon atoms, an alkylene group having 1 to 10 carbon atoms, or an alkylarylene group having 7 to 22 carbon atoms, and these groups may each contain, in at least one of its main chain or a side chain thereof, at least one group selected from the group consisting of: -O-; -COO-; -CO-; -S-; -NH-; and -NR¹¹¹-. R⁷ represents an arylene group having 6 to 20 carbon atoms, an alkylene group having 1 to 10 carbon atoms, or an alkylarylene group having 7 to 22 carbon atoms, and these groups may each contain, in at least one of its main chain or a side chain thereof, at least one group selected from the group consisting of: -O-; -COO-; -CO-; -S-; -NH-; and -NR¹¹¹-. R¹¹¹ represents the same meaning as that described above. b1 represents an integer of from 2 to 200. u1 and z1 each represent 0 or 1.

In addition, the polyorganosiloxane block may have at least one of structures represented by the following formulae (23) to (26).

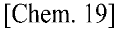

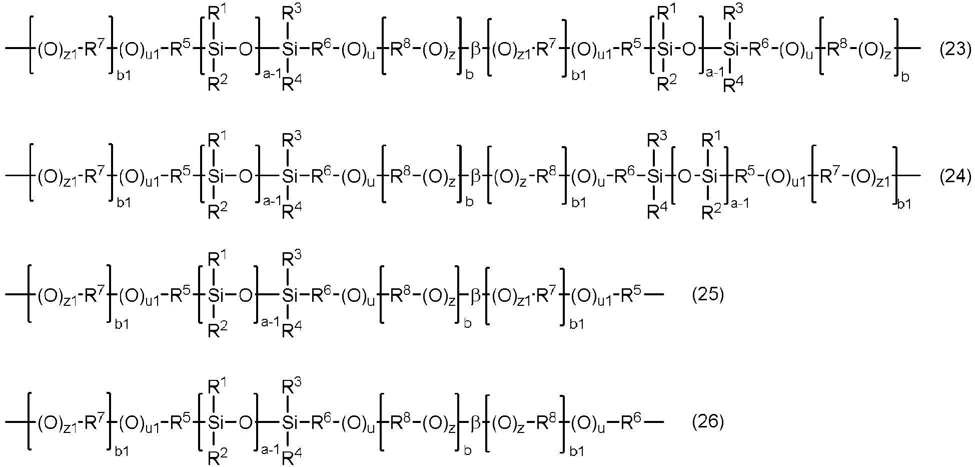

In the formulae (23) to (26), R¹ to R⁸, "a", "b", b1, "u", u1, "z", and z1 represent the same meanings as those of R¹ to R⁸, "a", "b", b1, "u", u1, "z", and z1 in the formula (2), the formula (21), and the formula (22). However, in -(O)_{z}- and -(O)_{z1}- to be bonded to β, "z" and z1 each represent 1. β represents a divalent group derived from a diisocyanate compound, or a divalent group derived from a dicarboxylic acid compound.

Examples of the halogen atom represented by each of R³ and R⁴ in the formulae (23) to (26) include the same examples as those of the halogen atom represented by each of R¹ and R². Examples of the alkyl group having 1 to 10 carbon atoms represented by each of R¹ to R⁴ include the same examples as those of the alkyl group represented by each of R¹ and R². Examples of the alkoxy group having 1 to 10 carbon atoms represented by each of R³ and R⁴ include the same examples as those of the alkoxy group represented by each of R¹ and R². Examples of the aryl group having 6 to 12 carbon atoms represented by each of R³ and R⁴ include the same examples as those of the aryl group represented by each of R¹ and R². Examples of the alkylaryl group having 7 to 22 carbon atoms represented by each of R³ and R⁴ include the same examples as those of the alkylaryl group represented by each of R¹ and R².

R³ and R⁴ each preferably represent a hydrogen atom, an alkyl group having 1 to 6 carbon atoms, an alkoxy group having 1 to 6 carbon atoms, an aryl group having 6 to 12 carbon atoms, or an arylalkyl group having 7 to 22 carbon atoms, each more preferably represent an alkyl group having 1 to 6 carbon atoms, and each still more preferably represent a methyl group.

Examples of the arylene group having 6 to 20 carbon atoms represented by R⁵, R⁶, R⁷, or R⁸ include a phenylene group and a naphthylene group. Examples of the alkylene group having 1 to 10 carbon atoms represented by R⁵, R⁶, R⁷, or R⁸ include a methylene group, a dimethylene group, a trimethylene group, a methyl-substituted dimethylene group, and various butylene groups. Among the various butylene groups, a tetramethylene group is preferred. Examples of the alkylarylene group having 7 to 22 carbon atoms represented by R⁵, R⁶, R⁷, or R⁸ include alkylarylene groups whose alkyl group moieties are the same as the above-mentioned alkylene groups and whose arylene group moieties are the same as the above-mentioned arylene groups. However, those groups may each contain, in at least one of its main chain or a side chain thereof, at least one group selected from the group consisting of: - O-; -COO-; -CO-; -S-; -NH-; and -NR¹¹¹-. R1¹¹ represents an alkyl group having 1 to 10 carbon atoms, or an aryl group having 6 to 10 carbon atoms. Examples of the alkyl group having 1 to 10 carbon atoms represented by R¹¹¹ include a methyl group, an ethyl group, a *n-*propyl group, an isopropyl group, various butyl groups, various pentyl groups, and various hexyl groups. Examples of the aryl group having 6 to 10 carbon atoms represented by R¹¹¹ include a phenyl group and a naphthyl group.

R⁵ and R⁶ each preferably represent an alkylene group having 1 to 10 carbon atoms or an alkylarylene group having 7 to 22 carbon atoms, each more preferably represent an alkylene group having 1 to 5 carbon atoms or an alkylarylene group having 7 to 11 carbon atoms, and each still more preferably represent a trimethylene group or a trimethylenyl phenylene group (-CH₂CH₂CH₂-Ph-).

R⁷ and R⁸ each preferably represent an alkylene group having 1 to 10 carbon atoms, each more preferably represent an alkylene group having 1 to 5 carbon atoms, each still more preferably represent a dimethylene group, a methyl-substituted dimethylene group (-CH₂CHMe-), a trimethylene group, or a tetramethylene group, and each still more preferably represent a dimethylene group.

In each of the formula (2) and the formulae (21) to (26), "a" represents a number obtained by adding 1 to the number of repetitions of the structural unit represented by the formula (XX). That is, the number is the number of repetitions of a Si atom, and is also referred to as "chain length." "a" represents an integer of preferably 2 or more, more preferably 10 or more, still more preferably 15 or more, even still more preferably 20 or more, and preferably 300 or less, more preferably 95 or less, still more preferably 70 or less, even still more preferably 50 or less. In addition, in each of the formula (2) and the formulae (21) to (26), "a" represents an integer of preferably from 2 to 300, more preferably from 10 to 95, still more preferably from 15 to 70, even still more preferably from 20 to 50.

The average of "a"s in the polycarbonate-based resin (S) is preferably 2 or more, more preferably 5 or more, still more preferably 10 or more, even still more preferably 15 or more, particularly preferably 20 or more, and is preferably 300 or less, more preferably 95 or less, still more preferably 70 or less, even still more preferably 50 or less. In addition, the average of "a"s in the polycarbonate-based resin (S) is preferably from 2 to 300, more preferably from 10 to 95, still more preferably from 15 to 70, even still more preferably from 15 to 50, even still more preferably from 20 to 50.

The average of "a"s in the polycarbonate-based resin (S) is calculated by nuclear magnetic resonance (NMR) measurement.

In the formulae (21) to (26), "b" and b1 each represent the number of repeating units, and each independently represent an integer of preferably 2 or more, more preferably 5 or more, still more preferably 8 or more, still more preferably 10 or more, still more preferably 12 or more, and preferably 200 or less, more preferably 100 or less, still more preferably 50 or less, still more preferably 30 or less, still more preferably 25 or less, still more preferably 20 or less. In addition, in the formulae (21) to (26), "b" and b1 each independently represent an integer of preferably from 2 to 200, more preferably from 5 to 100, still more preferably from 8 to 50, still more preferably from 10 to 30, still more preferably from 12 to 25, still more preferably from 12 to 20.

In the polycarbonate-based resin (S), the average of "b"s, the average of b1s, and an average b2 when "b"s and b1s are combined are each preferably 2 or more, more preferably 5 or more, still more preferably 8 or more, still more preferably 10 or more, still more preferably 12 or more, and are each preferably 200 or less, more preferably 100 or less, still more preferably 50 or less, still more preferably 30 or less, still more preferably 25 or less, still more preferably 20 or less. The averages preferably fall within the above-mentioned ranges because of the ease of availability of a raw material. In addition, in the polycarbonate-based resin (S), the average of "b"s, the average of b1s, and the average b2 when "b"s and b1s are combined are each preferably from 2 to 200, more preferably from 5 to 100, still more preferably from 8 to 50, still more preferably from 10 to 30, still more preferably from 12 to 25, still more preferably from 12 to 20.

The average b2 in the polycarbonate-based resin (S) is calculated by nuclear magnetic resonance (NMR) measurement.

In the formula (21), "u" preferably represents 1. In addition, in the formulae (22) to (26), "u" and u1 each preferably represent 1, and both "u" and u1 more preferably represent 1.

In the formula (21), "z" preferably represents 1. In addition, in the formulae (22) to (26), "z" and z1 each preferably represent 1, and both "z" and z1 more preferably represent 1.

In the formula (21), it is still more preferred that all R¹ to R⁴ represent methyl groups, R⁶ represent a trimethylene group, R⁸ represent a dimethylene group, and "z" represent 1. It is still more preferred that all R¹ to R⁴ represent methyl groups, R⁶ represent a trimethylene group, R⁸ represent a dimethylene group, "z" represent 1, and "u" represent 1.

In the formulae (22) to (26), it is still more preferred that all R¹ to R⁴ represent methyl groups, both R⁵ and R⁶ represent trimethylene groups, both R⁷ and R⁸ represent dimethylene groups, both "z" and z¹ represent 1, and both "u" and u1 represent 1.

In the formulae (23) to (26), β represents a divalent group derived from a diisocyanate compound, or a divalent group derived from a dicarboxylic acid compound. Examples of the dicarboxylic acid compound include a dicarboxylic acid, an anhydride of a dicarboxylic acid, a halide of a dicarboxylic acid, and a diester of a dicarboxylic acid and a lower alcohol. Examples of the lower alcohol include methanol, ethanol, and propanol. Examples of β include divalent groups represented by the following formulae (i) to (v).

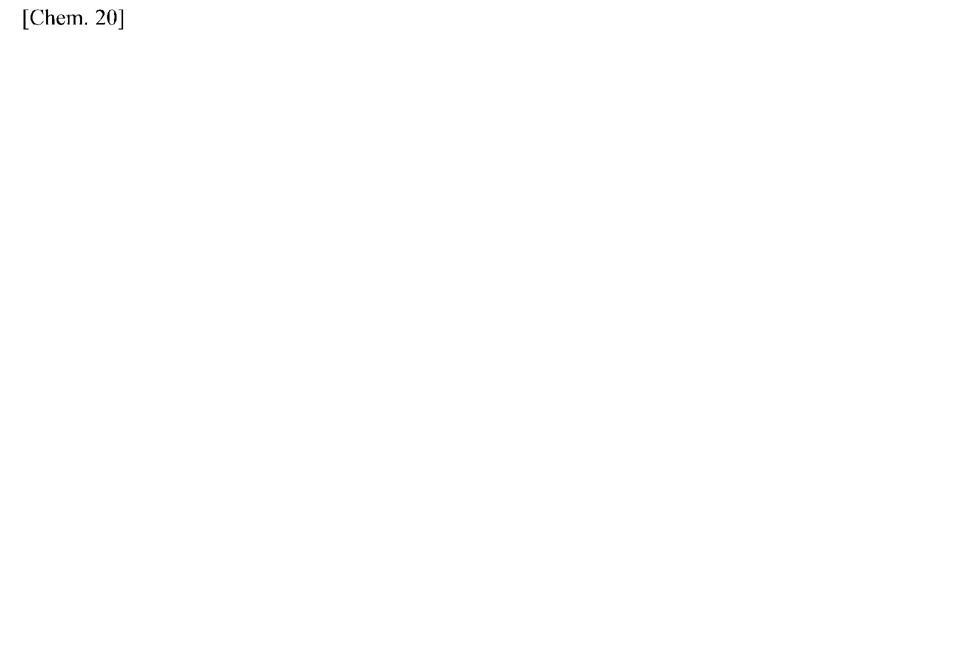

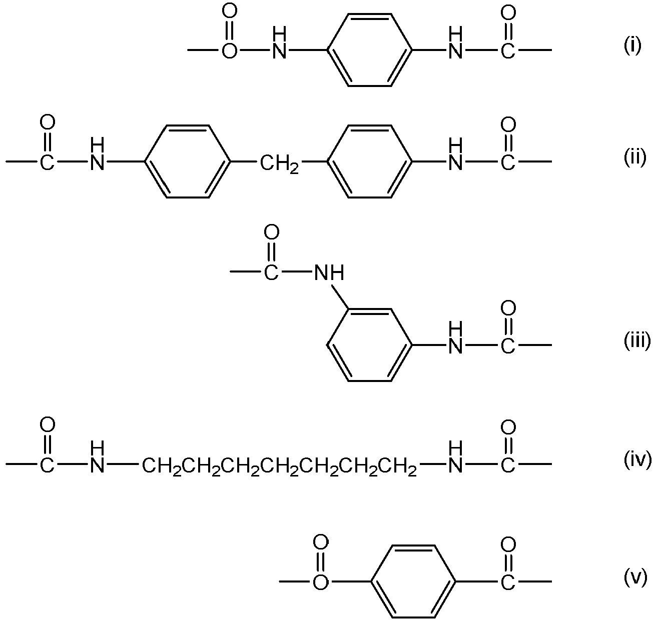

From the viewpoint of obtaining a polycarbonate-based resin composition and a molded article thereof that are each excellent in impact resistance, the polyorganosiloxane block preferably has no branched structure.

From the viewpoint of obtaining a polycarbonate-based resin composition and a molded article thereof that are each excellent in balance between its impact resistance and scratch resistance, the content of the structural unit represented by the formula (XX) in the polycarbonate-based resin (S) according to the present invention is 2.0 mass% or more, preferably 3.0 mass% or more, more preferably 4.0 mass% or more, still more preferably 5.0 mass% or more, and is 25.0 mass% or less, preferably 20.0 mass% or less, more preferably 15.0 mass% or less, still more preferably 10.0 mass% or less.

For example, the term "content of the structural unit represented by the formula (XX) in the polycarbonate-based resin (S)" refers to the ratio of the mass of the structural unit represented by the formula (XX) with respect to the total mass of the structural unit (A-1) represented by the formula (1) and the structural unit represented by the formula (XX), and the structural units (A-31) to (A-34) represented by the formulae (31) to (34).

A method of measuring the content of the structural unit represented by the formula (XX) in the polycarbonate-based resin (S) is not particularly limited, and an example thereof is nuclear magnetic resonance (NMR) analysis.

The polycarbonate-based resin (S) according to the present invention may be formed only of one kind or two or more kinds of the following polycarbonate-polyorganosiloxane copolymers (A), or may include the following polycarbonate-based resin (P) except the following polycarbonate-polyorganosiloxane copolymer (A) (hereinafter sometimes referred to as "polycarbonate-based resin (P)").

From the viewpoint of improving the impact resistance of the molded article, the content of the polycarbonate-polyorganosiloxane copolymer (A) in the polycarbonate-based resin (S) is preferably 90 mass% or more, more preferably 95 mass% or more, still more preferably 98 mass% or more. The upper limit of the content of the polycarbonate-polyorganosiloxane copolymer (A) in the polycarbonate-based resin (S) is not particularly limited, but the content is, for example, 100 mass% or less from the viewpoint of obtaining a polycarbonate-based resin composition having desired properties.

The number-average molecular weight (Mn) of the polycarbonate-based resin (S) is preferably 5,000 or more, more preferably 6,000 or more, still more preferably 7,000 or more, still more preferably 8,000 or more, and is preferably 30,000 or less, more preferably 25,000 or less, still more preferably 20,000 or less, still more preferably 15,000 or less.

The number-average molecular weight (Mn) of the polycarbonate-based resin (S) is the weighted average of the number-average molecular weights (Mn) of the respective copolymers or resins included in the polycarbonate-based resin (S), and each of the number-average molecular weights (Mn) may be measured by the same method as that for the number-average molecular weight (Mn) of the polycarbonate-polyorganosiloxane copolymer.

The weight-average molecular weight (Mw) of the polycarbonate-based resin (S) is preferably 20,000 or more, more preferably 23,000 or more, still more preferably 25,000 or more, and is preferably 60,000 or less, more preferably 50,000 or less, still more preferably 45,000 or less, still more preferably 43,000 or less.

The weight-average molecular weight (Mw) of the polycarbonate-based resin (S) is the weighted average of the weight-average molecular weights (Mw) of the respective copolymers or resins included in the polycarbonate-based resin (S), and each of the weight-average molecular weights (Mw) may be measured by the same method as that for the weight-average molecular weight (Mw) of the polycarbonate-polyorganosiloxane copolymer.

### [Polycarbonate-polyorganosiloxane Copolymer (A)]

The polycarbonate-polyorganosiloxane copolymer (A) included in the polycarbonate-based resin (S) includes the polycarbonate block including the structural unit (A-1) represented by the formula (1) and the polyorganosiloxane block including the repeating structure (A-2) of the structure represented by the formula (XX).

### (Polycarbonate Block)

An example of the polycarbonate block including the structural unit (A-1) represented by the formula (1) in the polycarbonate-polyorganosiloxane copolymer (A) is the same polycarbonate block including the structural unit (A-1) represented by the formula (1) shown in the section "Polycarbonate-based Resin (S)." Preferred forms thereof are also the same.

From the viewpoint of obtaining a polycarbonate-based resin composition and a molded article thereof that are each excellent in impact resistance, the content of the polycarbonate block in the polycarbonate-polyorganosiloxane copolymer (A) is preferably 75.0 mass% or more, more preferably 80.0 mass% or more, still more preferably 85.0 mass% or more, and is preferably 100.0 mass% or less, more preferably 95.0 mass% or less, still more preferably 90.0 mass% or less.

From the viewpoint of obtaining a polycarbonate-based resin composition and a molded article thereof that are each excellent in impact resistance, the content of the structural unit (A-1) in the polycarbonate block in the polycarbonate-polyorganosiloxane copolymer (A) is preferably 73.0 mass% or more, more preferably 80.0 mass% or more, still more preferably 85.0 mass% or more, and is preferably 100.0 mass% or less, more preferably 97.0 mass% or less, still more preferably 95.0 mass% or less.

When the polycarbonate-polyorganosiloxane copolymer (A) includes the structural unit (A-3) represented by the following formula (3) or (4), from the viewpoint of obtaining a polycarbonate-based resin composition and a molded article thereof that are each more excellent in impact resistance, the content of the structural unit (A-3) in the polycarbonate-polyorganosiloxane copolymer (A) is preferably 1.0 mass% or more, more preferably 3.0 mass% or more, still more preferably 4.0 mass% or more, and is preferably 25.0 mass% or less, more preferably 20.0 mass% or less, still more preferably 15.0 mass% or less.

When the polycarbonate-polyorganosiloxane copolymer (A) includes the structural unit (A-3) represented by the following formula (3) or (4), from the viewpoint of obtaining a polycarbonate-based resin composition and a molded article thereof that are each more excellent in impact resistance, the content of the structural unit (A-3) in the polycarbonate block in the polycarbonate-polyorganosiloxane copolymer (A) is preferably 1.0 mass% or more, more preferably 3.0 mass% or more, still more preferably 5.0 mass% or more, and is preferably 25.0 mass% or less, more preferably 20.0 mass% or less, still more preferably 15.0 mass% or less.

The contents of the polycarbonate block, the structural unit (A-1), and the structural unit (A-3) in the polycarbonate-polyorganosiloxane copolymer (A) are calculated by nuclear magnetic resonance (NMR) measurement.

The term "content of the structural unit (A-1) in the polycarbonate-polyorganosiloxane copolymer (A)" as used herein means the mass percentage of the structural unit (A-1) with respect to the total mass of the structural unit (A-1), the structural unit represented by the formula (XX), a structural unit represented by the following formula (Y), a terminal structure represented by -OR^{T}, and the structural unit (A-3) to be incorporated as required. The same applies to the "content of the structural unit (A-3) in the polycarbonate-polyorganosiloxane copolymer (A)."

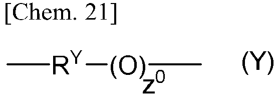

In the formula (Y), R^{Y} represents R⁵, R⁶, R⁷, or R⁸. When R^{Y} represents R⁵, z⁰ represents u1. When R^{Y} represents R⁶, z⁰ represents "u". When R^{Y} represents R⁷, z⁰ represents z1. When R^{Y} represents R⁸, z⁰ represents z2. R⁵, R⁶, R⁷, R⁸, u1, "u", z1, and z2 represent the same meanings as those of R⁵, R⁶, R⁷, R⁸, u1, "u", z1, and z2 shown in the following section <Polyorganosiloxane Block>.

### (Polyorganosiloxane Block)

An example of the polyorganosiloxane block including the repeating structure (A-2) of the structure represented by the formula (XX) in the polycarbonate-polyorganosiloxane copolymer (A) is the same polyorganosiloxane block including the repeating structure (A-2) of the structure represented by the formula (XX) shown in the section "Polycarbonate-based Resin (S)." Preferred forms thereof are also the same.

From the viewpoint of obtaining a polycarbonate-based resin composition and a molded article thereof that are each excellent in impact resistance, the content of the structural unit represented by the formula (XX) in the polycarbonate-polyorganosiloxane copolymer (A) is preferably 2.0 mass% or more, more preferably 3.0 mass% or more, still more preferably 4.0 mass% or more, and is preferably 25.0 mass% or less, more preferably 20.0 mass% or less, still more preferably 15.0 mass% or less, even still more preferably 10.0 mass% or less.

The term "content of the structural unit represented by the formula (XX) in the polycarbonate-polyorganosiloxane copolymer (A)" as used herein means the mass percentage of the structural unit represented by the formula (XX) with respect to the total mass of the structural unit (A-1), the structural unit represented by the formula (XX), the structural unit represented by the formula (Y), the terminal structure represented by -OR^{T}, and the structural unit (A-3) to be incorporated as required.

From the viewpoint of obtaining a polycarbonate-based resin composition and a molded article thereof that are each excellent in balance between its impact resistance and scratch resistance, the content of the polyorganosiloxane block in the polycarbonate-polyorganosiloxane copolymer (A) is preferably 2.0 mass% or more, more preferably 3.0 mass% or more, still more preferably 4.0 mass% or more, even still more preferably 7.5 mass% or more, particularly preferably 9.5 mass% or more, and is preferably 20.0 mass% or less, more preferably 15.0 mass% or less, still more preferably 13.0 mass% or less.

The term "content of the polyorganosiloxane block in the polycarbonate-polyorganosiloxane copolymer (A)" as used herein means the percentage of the total mass of the structural unit represented by the formula (XX) and the structural unit represented by the formula (Y) with respect to the total mass of the structural unit (A-1), the structural unit represented by the formula (XX), the structural unit represented by the formula (Y), the terminal structure represented by -OR^{T}, and the structural unit (A-3) as required.

The contents of the polyorganosiloxane block and the structural unit represented by the formula (XX) in the polycarbonate-polyorganosiloxane copolymer (A) are calculated by nuclear magnetic resonance (NMR) measurement.

### (Terminal Structure of Polycarbonate-polyorganosiloxane Copolymer (A))

In one embodiment, the polycarbonate-polyorganosiloxane copolymer (A) may include the terminal structure represented by -OR^{T}. R^{T} represents Ar¹, Ar², Ar³, Ar⁴, Ar⁵, Ar⁶, R²¹, R²², R²³, R²⁴, R²⁵, or R²⁶ to be described later, a *p*-cumylphenyl group, or a *p*-(*tert-*butyl)phenyl group, and preferably represents Ar¹, Ar², Ar³, Ar⁴, Ar⁵, Ar⁶, or a *p*-(*tert-*butyl)phenyl group.

Ar¹, Ar², Ar³, Ar⁴, Ar⁵, or Ar⁶ preferably represents a phenyl group, an *o*-tolyl group, a *m*-tolyl group, a *p*-tolyl group, a chlorophenyl group, or a naphthyl group, and more preferably represents a phenyl group.

The content of the terminal structure represented by -OR^{T} in the polycarbonate-polyorganosiloxane copolymer (A) is preferably 0.01 mass% or more, more preferably 0.2 mass% or more, still more preferably 0.5 mass% or more, and is preferably 3.0 mass% or less, more preferably 2.5 mass% or less, still more preferably 2.0 mass% or less. In addition, the content of the terminal structure represented by -OR^{T} in the polycarbonate-polyorganosiloxane copolymer (A) is preferably from 0.01 mass% to 3.0 mass%, more preferably from 0.2 mass% to 2.5 mass%, still more preferably from 0.5 mass% to 2.0 mass%. As the content of the terminal structure represented by -OR^{T} becomes higher, the content of a terminal hydroxy group derived from a diol monomer is reduced, and the heat resistance and glass transition temperature of a resin are increased.

The content of the terminal structure represented by -OR^{T} is calculated by nuclear magnetic resonance (NMR) measurement.

From the viewpoint of obtaining a polycarbonate-based resin composition and a molded article thereof that are each excellent in impact resistance, the number-average molecular weight (Mn) of the polycarbonate-polyorganosiloxane copolymer (A) is preferably 5,000 or more, more preferably 8,000 or more, still more preferably 10,000 or more, and is preferably 30,000 or less, more preferably 25,000 or less, still more preferably 20,000 or less, still more preferably 15,000 or less. In addition, the number-average molecular weight (Mn) of the polycarbonate-polyorganosiloxane copolymer (A) is preferably from 5,000 to 30,000, more preferably from 8,000 to 25,000, still more preferably from 8,000 to 20,000, still more preferably from 8,000 to 15,000.

In particular, from the viewpoint of obtaining a polycarbonate-based resin composition and a molded article thereof that are each more excellent in impact resistance, the number-average molecular weight (Mn) of the polycarbonate-polyorganosiloxane copolymer (A) is preferably 8,000 or more, more preferably 9,000 or more, still more preferably 10,000 or more.

The weight-average molecular weight (Mw) of the polycarbonate-polyorganosiloxane copolymer (A) is preferably 20,000 or more, more preferably 23,000 or more, still more preferably 25,000 or more, and is preferably 60,000 or less, more preferably 50,000 or less, still more preferably 45,000 or less, still more preferably 43,000 or less. In addition, the weight-average molecular weight (Mw) of the polycarbonate-polyorganosiloxane copolymer (A) is preferably from 20,000 to 60,000, more preferably from 23,000 to 50,000, still more preferably from 25,000 to 45,000, still more preferably from 25,000 to 43,000.

In particular, from the viewpoint of obtaining a polycarbonate-based resin composition and a molded article thereof that are each more excellent in impact resistance, the weight-average molecular weight (Mw) of the polycarbonate-polyorganosiloxane copolymer (A) is preferably 25,000 or more, more preferably 26,000 or more, still more preferably 27,000 or more.

The viscosity-average molecular weight (Mv) of the polycarbonate-polyorganosiloxane copolymer (A) is preferably 5,000 or more, more preferably 8,000 or more, still more preferably 10,000 or more, still more preferably 15,000 or more, and is preferably 30,000 or less, more preferably 25,000 or less, still more preferably 20,000 or less, still more preferably 18,000 or less. In addition, the viscosity-average molecular weight (Mv) of the polycarbonate-polyorganosiloxane copolymer (A) is preferably from 5,000 to 30,000, more preferably from 8,000 to 25,000, still more preferably from 10,000 to 23,000, still more preferably from 14,000 to 20,000, still more preferably from 16,000 to 18,000.

In particular, from the viewpoint of obtaining a polycarbonate-based resin composition and a molded article thereof that are each more excellent in impact resistance, the viscosity-average molecular weight (Mv) of the polycarbonate-polyorganosiloxane copolymer (A) is preferably 10,000 or more, more preferably 11,000 or more, still more preferably 12,000 or more.

Although the reason why the impact resistance is improved by adjusting the number-average molecular weight, the weight-average molecular weight, and the viscosity-average molecular weight within the above-mentioned ranges is not clear, a possible reason is as described below.

It is conceivable that when the number-average molecular weight, the weight-average molecular weight, and the viscosity-average molecular weight are equal to or more than certain values, entanglement and an interaction between polymer chains are enhanced, and hence the impact resistance is improved.

The ratio (Mw/Mn) of the weight-average molecular weight (Mw) to the number-average molecular weight (Mn) of the polycarbonate-polyorganosiloxane copolymer (A) is preferably 1.8 or more, more preferably 2.2 or more, still more preferably 2.5 or more, and is preferably 3.2 or less, more preferably 3.0 or less, still more preferably 2.9 or less. In addition, the ratio (Mw/Mn) is preferably from 1.8 to 3.2, more preferably from 2.2 to 3.0, still more preferably from 2.5 to 2.9.

In one embodiment, the polycarbonate-polyorganosiloxane copolymer (A) included in the polycarbonate-based resin (S) may be a polycarbonate-polyorganosiloxane copolymer (S-1) including: a polycarbonate block including the structural unit (A-1) represented by the formula (1) and the structural unit (A-31) represented by the formula (31); and the polyorganosiloxane block including the structural unit (A-2) represented by the formula (2), in which the molar ratio (A-31/A-1) of the structural unit (A-31) to the structural unit (A-1) and the content "x" of the structural unit represented by the formula (XX) in the polycarbonate-polyorganosiloxane copolymer (A) satisfy the following condition (C1) or (D1).

Condition (C1): the ratio "A-31/A-1" is 1.0/99.0 or more and 25.0/75.0 or less, and the content "x" is 1.0 mass% or more and less than 4.0 mass%.

Condition (D1): the ratio "A-31/A-1" is 1.0/99.0 or more and 30.0/70.0 or less, and the content "x" is 4.0 mass% or more and 10.0 mass% or less.

In the condition (C1), the ratio "A-31/A-1" is preferably 20.0/80.0 or less, more preferably 17.0/83.0 or less. In addition, in the condition (C1), the ratio "A-31/A-1" is preferably from 1.0/99.0 to 20.0/80.0, more preferably from 1.0/99.0 to 17.0/83.0.

In the condition (D1), the ratio "A-31/A-1" is preferably 25.0/75.0 or less, more preferably 17.0/83.0 or less. In addition, in the condition (D1), the ratio "A-31/A-1" is preferably from 1.0/99.0 to 25.0/75.0, more preferably from 1.0/99.0 to 17.0/83.0.

In the polycarbonate-polyorganosiloxane copolymer (S-1), the total content of the structural units (A-1) and (A-31) is preferably 70.0 mol% or more, more preferably 80.0 mol% or more, still more preferably 90.0 mol% or more, still more preferably 100.0 mol% in the polycarbonate block.

In one embodiment, the polycarbonate-polyorganosiloxane copolymer (A) included in the polycarbonate-based resin (S) may be a polycarbonate-polyorganosiloxane copolymer (S-2) including: a polycarbonate block including the structural unit (A-1) represented by the formula (1) and the structural unit (A-32) represented by the formula (32); and the polyorganosiloxane block including the structural unit (A-2) represented by the formula (2), in which the total content of the structural units (A-1) and (A-32) in the polycarbonate block included in the polycarbonate-polyorganosiloxane copolymer (A) is 90.0 mol% or more, and the molar ratio (A-32/A-1) of the structural unit (A-32) to the structural unit (A-1) and the content "x" of the structural unit represented by the formula (XX) satisfy the following condition (C2) or (D2).

Condition (C2): the ratio "A-32/A-1" is 1.0/99.0 or more and 35.0/65.0 or less, and the content "x" is 1.0 mass% or more and less than 4.0 mass%.

Condition (D2): the ratio "A-32/A-1" is 1.0/99.0 or more and 27.0/73.0 or less, and the content "x" is 4.0 mass% or more and 10.0 mass% or less.

In the condition (C2), the ratio "A-32/A-1" is preferably 32.0/68.0 or less, more preferably 28.0/72.0 or less. In addition, in the condition (C2), the ratio "A-32/A-1" is preferably from 1.0/99.0 to 32.0/68.0, more preferably from 1.0/99.0 to 28.0/72.0.

In the condition (D2), the ratio "A-32/A-1" is preferably 24.0/76.0 or less, more preferably 21.0/79.0 or less. In addition, in the condition (D2), the ratio "A-32/A-1" is preferably from 1.0/99.0 to 24.0/76.0, more preferably from 1.0/99.0 to 21.0/79.0.

In the polycarbonate-polyorganosiloxane copolymer (S-2), the total content of the structural units (A-1) and (A-32) is preferably 100.0 mol% in the polycarbonate block.

In one embodiment, the polycarbonate-polyorganosiloxane copolymer (A) included in the polycarbonate-based resin (S) may be a polycarbonate-polyorganosiloxane copolymer (S-3) including: a polycarbonate block including the structural unit (A-1) represented by the formula (1) and the structural unit (A-33) represented by the formula (33); and the polyorganosiloxane block including the structural unit (A-2) represented by the formula (2), in which the molar ratio (A-33/A-1) of the structural unit (A-33) to the structural unit (A-1) and the content "x" of the structural unit represented by the formula (XX) satisfy the following condition (C3) or (D3).

Condition (C3): the ratio "A-33/A-1" is 1.0/99.0 or more and 40.0/60.0 or less, and the content "x" is 1.0 mass% or more and less than 4.0 mass%.

Condition (D3): the ratio "A-33/A-1" is 1.0/99.0 or more and 35.0/65.0 or less, and the content "x" is 4.0 mass% or more and 10.0 mass% or less.

In the condition (C3), the ratio "A-33/A-1" is preferably 35.0/65.0 or less, more preferably 30.0/70.0 or less. In addition, in the condition (C3), the ratio "A-33/A-1" is preferably from 1.0/99.0 to 35.0/65.0, more preferably from 1.0/99.0 to 30.0/70.0.

In the condition (D3), the ratio "A-33/A-1" is preferably 33.0/67.0 or less, more preferably 31.0/69.0 or less. In addition, in the condition (D3), the ratio "A-33/A-1" is preferably from 1.0/99.0 to 33.0/67.0, more preferably from 1.0/99.0 to 31.0/69.0.

In the polycarbonate-polyorganosiloxane copolymer (S-3), the total content of the structural units (A-1) and (A-33) is preferably 70.0 mol% or more, more preferably 80.0 mol% or more, still more preferably 90.0 mol% or more, still more preferably 100.0 mol% in the polycarbonate block.

In one embodiment, the polycarbonate-polyorganosiloxane copolymer (A) included in the polycarbonate-based resin (S) may be a polycarbonate-polyorganosiloxane copolymer (S-4) including: a polycarbonate block including the structural unit (A-1) represented by the formula (1), the structural unit (A-32) represented by the formula (32), and the structural unit (A-33) represented by the formula (33); and the polyorganosiloxane block including the structural unit (A-2) represented by the formula (2), in which the molar ratio ((total of A-32 and A-33)/A-1) of the total of the structural units (A-32) and (A-33) to the structural unit (A-1), the molar ratio (A-32/A-33) of the structural unit (A-32) to the structural unit (A-33), and the content "x" of the structural unit represented by the formula (XX) satisfy the following condition (C41), (C42), (C43), (D41), (D42), or (D43).

Condition (C41): the ratio "A-32/A-33" is 60.0/40.0 or more and 99.0/1.0 or less, the ratio "(total of A-32 and A-33)/A-1" is 1.0/99.0 or more and 39.0/61.0 or less, and the content "x" is 1.0 mass% or more and less than 4.0 mass%.

Condition (C42): the ratio "A-32/A-33" is 40.0/60.0 or more and less than 60.0/40.0, the ratio "(total of A-32 and A-33)/A-1" is 1.0/99.0 or more and 31.0/69.0 or less, and the content "x" is 1.0 mass% or more and less than 4.0 mass%.

Condition (C43): the ratio "A-32/A-33" is 1.0/99.0 or more and less than 40.0/60.0, the ratio "(total of A-32 and A-33)/A-1" is 1.0/99.0 or more and 46.0/54.0 or less, and the content "x" is 1.0 mass% or more and less than 4.0 mass%.

Condition (D41): the ratio "A-32/A-33" is 60.0/40.0 or more and 99.0/1.0 or less, the ratio "(total of A-32 and A-33)/A-1" is 1.0/99.0 or more and 32.0/68.0 or less, and the content "x" is 4.0 mass% or more and 10.0 mass% or less.

Condition (D42): the ratio "A-32/A-33" is 40.0/60.0 or more and less than 60.0/40.0, the ratio "(total of A-32 and A-33)/A-1" is 1.0/99.0 or more and 36.0/64.0 or less, and the content "x" is 4.0 mass% or more and 10.0 mass% or less.

Condition (D43): the ratio "A-32/A-33" is 1.0/99.0 or more and less than 40.0/60.0, the ratio "(total of A-32 and A-33)/A-1" is 1.0/99.0 or more and 41.0/59.0 or less, and the content "x" is 4.0 mass% or more and 10.0 mass% or less.

In the condition (C41), the ratio "(total of A-32 and A-33)/A-1" is preferably 35.0/65.0 or less, more preferably 31.0/69.0 or less. In addition, in the condition (C41), the ratio "(total of A-32 and A-33)/A-1" is preferably from 1.0/99.0 to 35.0/65.0, more preferably from 1.0/99.0 to 31.0/69.0.

In the condition (C42), the ratio "(total of A-32 and A-33)/A-1" is preferably 30.0/70.0 or less, more preferably 25.0/75.0 or less. In addition, in the condition (C42), the ratio "(total of A-32 and A-33)/A-1" is preferably from 1.0/99.0 to 30.0/70.0, more preferably from 1.0/99.0 to 25.0/75.0.

In the condition (C43), the ratio "(total of A-32 and A-33)/A-1" is preferably 42.0/58.0 or less, more preferably 37.0/63.0 or less. In addition, in the condition (C43), the ratio "(total of A-32 and A-33)/A-1" is preferably from 1.0/99.0 to 42.0/58.0, more preferably from 1.0/99.0 to 37.0/63.0.

In the condition (D41), the ratio "(total of A-32 and A-33)/A-1" is preferably 28.0/72.0 or less, more preferably 25.0/75.0 or less. In addition, in the condition (D41), the ratio "(total of A-32 and A-33)/A-1" is preferably from 1.0/99.0 to 28.0/72.0, more preferably from 1.0/99.0 to 25.0/75.0.

In the condition (D42), the ratio "(total of A-32 and A-33)/A-1" is preferably 31.0/69.0 or less, more preferably 28.0/72.0 or less. In addition, in the condition (D42), the ratio "(total of A-32 and A-33)/A-1" is preferably from 1.0/99.0 to 31.0/69.0, more preferably from 1.0/99.0 to 28.0/72.0.

In the condition (D43), the ratio "(total of A-32 and A-33)/A-1" is preferably 35.0/65.0 or less, more preferably 32.0/68.0 or less. In addition, in the condition (D43), the ratio "(total of A-32 and A-33)/A-1" is preferably from 1.0/99.0 to 35.0/65.0, more preferably from 1.0/99.0 to 32.0/68.0.

In the polycarbonate-polyorganosiloxane copolymer (S-4), the total content of the structural units (A-1), (A-32), and (A-33) is preferably 70.0 mol% or more, more preferably 80.0 mol% or more, still more preferably 90.0 mol% or more, still more preferably 100.0 mol% in the polycarbonate block.

In one embodiment, the polycarbonate-polyorganosiloxane copolymer (A) included in the polycarbonate-based resin (S) may be a polycarbonate-polyorganosiloxane copolymer (S-5) including: a polycarbonate block including the structural unit (A-1) represented by the formula (1), the structural unit (A-31) represented by the formula (31), and the structural unit (A-33) represented by the formula (33); and the polyorganosiloxane block including the structural unit (A-2) represented by the formula (2), in which the molar ratio ((total of A-31 and A-33)/A-1) of the total of the structural units (A-31) and (A-33) to the structural unit (A-1), the molar ratio (A-31/A-33) of the structural unit (A-31) to the structural unit (A-33), and the content "x" of the structural unit represented by the formula (XX) satisfy the following condition (C51), (C52), (C53), (D51), (D52), or (D53).

Condition (C51): the ratio "A-31/A-33" is 60.0/40.0 or more and 99.0/1.0 or less, the ratio "(total of A-31 and A-33)/A-1" is 1.0/99.0 or more and 39.0/61.0 or less, and the content "x" is 1.0 mass% or more and less than 4.0 mass%.

Condition (C52): the ratio "A-31/A-33" is 40.0/60.0 or more and less than 60.0/40.0, the ratio "(total of A-31 and A-33)/A-1" is 1.0/99.0 or more and 43.0/57.0 or less, and the content "x" is 1.0 mass% or more and less than 4.0 mass%.

Condition (C53): the ratio "A-31/A-33" is 1.0/99.0 or more and less than 40.0/60.0, the ratio "(total of A-31 and A-33)/A-1" is 1.0/99.0 or more and 46.0/54.0 or less, and the content "x" is 1.0 mass% or more and less than 4.0 mass%.

Condition (D51): the ratio "A-31/A-33" is 60.0/40.0 or more and 99.0/1.0 or less, the ratio "(total of A-31 and A-33)/A-1" is 1.0/99.0 or more and 34.0/66.0 or less, and the content "x" is 4.0 mass% or more and 10.0 mass% or less.

Condition (D52): the ratio "A-31/A-33" is 40.0/60.0 or more and less than 60.0/40.0, the ratio "(total of A-31 and A-33)/A-1" is 1.0/99.0 or more and 38.0/62.0 or less, and the content "x" is 4.0 mass% or more and 10.0 mass% or less.

Condition (D53): the ratio "A-31/A-33" is 1.0/99.0 or more and less than 40.0/60.0, the ratio "(total of A-31 and A-33)/A-1" is 1.0/99.0 or more and 41.0/59.0 or less, and the content "x" is 4.0 mass% or more and 10.0 mass% or less.

In the condition (C51), the ratio "(total of A-31 and A-33)/A-1" is preferably 34.0/66.0 or less, more preferably 29.0/71.0 or less. In addition, in the condition (C51), the ratio "(total of A-31 and A-33)/A-1" is preferably from 1.0/99.0 to 34.0/66.0, more preferably from 1.0/99.0 to 29.0/71.0.

In the condition (C52), the ratio "(total of A-31 and A-33)/A-1" is preferably 38.0/62.0 or less, more preferably 33.0/67.0 or less. In addition, in the condition (C52), the ratio "(total of A-31 and A-33)/A-1" is preferably from 1.0/99.0 to 38.0/62.0, more preferably from 1.0/99.0 to 33.0/67.0.

In the condition (C53), the ratio "(total of A-31 and A-33)/A-1" is preferably 41.0/59.0 or less, more preferably 36.0/64.0 or less. In addition, in the condition (C53), the ratio "(total of A-31 and A-33)/A-1" is preferably from 1.0/99.0 to 41.0/59.0, more preferably from 1.0/99.0 to 36.0/64.0.

In the condition (D51), the ratio "(total of A-31 and A-33)/A-1" is preferably 28.0/72.0 or less, more preferably 22.0/78.0 or less. In addition, in the condition (D51), the ratio "(total of A-31 and A-33)/A-1" is preferably from 1.0/99.0 to 28.0/72.0, more preferably from 1.0/99.0 to 22.0/78.0.

In the condition (D52), the ratio "(total of A-31 and A-33)/A-1" is preferably 32.0/68.0 or less, more preferably 26.0/74.0 or less. In addition, in the condition (D52), the ratio "(total of A-31 and A-33)/A-1" is preferably from 1.0/99.0 to 32.0/68.0, more preferably from 1.0/99.0 to 26.0/74.0.

In the condition (D53), the ratio "(total of A-31 and A-33)/A-1" is preferably 35.0/65.0 or less, more preferably 31.0/69.0 or less. In addition, in the condition (D53), the ratio "(total of A-31 and A-33)/A-1" is preferably from 1.0/99.0 to 35.0/65.0, more preferably from 1.0/99.0 to 31.0/69.0.

In the polycarbonate-polyorganosiloxane copolymer (S-5), the total content of the structural units (A-1), (A-31), and (A-33) is preferably 70.0 mol% or more, more preferably 80.0 mol% or more, still more preferably 90.0 mol% or more, still more preferably 100.0 mol% in the polycarbonate block.

In one embodiment, the polycarbonate-polyorganosiloxane copolymer (A) included in the polycarbonate-based resin (S) may be a polycarbonate-polyorganosiloxane copolymer (S-6) including: a polycarbonate block including the structural unit (A-1) represented by the formula (1), the structural unit (A-31) represented by the formula (31), and the structural unit (A-32) represented by the formula (32); and the polyorganosiloxane block including the structural unit (A-2) represented by the formula (2), in which the molar ratio ((total of A-31 and A-32)/A-1) of the total of the structural units (A-31) and (A-32) to the structural unit (A-1), the molar ratio (A-31/A-32) of the structural unit (A-31) to the structural unit (A-32), and the content "x" of the structural unit represented by the formula (XX) satisfy the following condition (C61), (C62), (C63), (D61), (D62), or (D63).

Condition (C61): the ratio "A-31/A-32" is 60.0/40.0 or more and 99.0/1.0 or less, the ratio "(total of A-31 and A-32)/A-1" is 1.0/99.0 or more and 35.0/65.0 or less, and the content "x" is 1.0 mass% or more and less than 4.0 mass%.

Condition (C62): the ratio "A-31/A-32" is 40.0/60.0 or more and less than 60.0/40.0, the ratio "(total of A-31 and A-32)/A-1" is 1.0/99.0 or more and 35.0/65.0 or less, and the content "x" is 1.0 mass% or more and less than 4.0 mass%.

Condition (C63): the ratio "A-31/A-32" is 1.0/99.0 or more and less than 40.0/60.0, the ratio "(total of A-31 and A-33)/A-1" is 1.0/99.0 or more and 43.0/57.0 or less, and the content "x" is 1.0 mass% or more and less than 4.0 mass%.

Condition (D61): the ratio "A-31/A-32" is 60.0/40.0 or more and 99.0/1.0 or less, the ratio "(total of A-31 and A-32)/A-1" is 1.0/99.0 or more and 29.0/71.0 or less, and the content "x" is 4.0 mass% or more and 10.0 mass% or less.

Condition (D62): the ratio "A-31/A-32" is 40.0/60.0 or more and less than 60.0/40.0, the ratio "(total of A-31 and A-32)/A-1" is 1.0/99.0 or more and 29.0/71.0 or less, and the content "x" is 4.0 mass% or more and 10.0 mass% or less.

Condition (D63): the ratio "A-31/A-32" is 1.0/99.0 or more and less than 40.0/60.0, the ratio "(total of A-31 and A-32)/A-1" is 1.0/99.0 or more and 37.0/63.0 or less, and the content "x" is 4.0 mass% or more and 10.0 mass% or less.

In the condition (C61), the ratio "(total of A-31 and A-32)/A-1" is preferably 31.0/69.0 or less, more preferably 26.0/74.0 or less. In addition, in the condition (C61), the ratio "(total of A-31 and A-32)/A-1" is preferably from 1.0/99.0 to 31.0/69.0, more preferably from 1.0/99.0 to 26.0/74.0.

In the condition (C62), the ratio "(total of A-31 and A-32)/A-1" is preferably 31.0/69.0 or less, more preferably 27.0/73.0 or less. In addition, in the condition (C62), the ratio "(total of A-31 and A-32)/A-1" is preferably from 1.0/99.0 to 31.0/69.0, more preferably from 1.0/99.0 to 27.0/73.0.

In the condition (C63), the ratio "(total of A-31 and A-32)/A-1" is preferably 38.0/62.0 or less, more preferably 33.0/67.0 or less. In addition, in the condition (C63), the ratio "(total of A-31 and A-32)/A-1" is preferably from 1.0/99.0 to 38.0/62.0, more preferably from 1.0/99.0 to 33.0/67.0.

In the condition (D61), the ratio "(total of A-31 and A-32)/A-1" is preferably 25.0/75.0 or less, more preferably 18.0/82.0 or less. In addition, in the condition (D61), the ratio "(total of A-31 and A-32)/A-1" is preferably from 1.0/99.0 to 25.0/75.0, more preferably from 1.0/99.0 to 18.0/82.0.

In the condition (D62), the ratio "(total of A-31 and A-32)/A-1" is preferably 25.0/75.0 or less, more preferably 19.0/81.0 or less. In addition, in the condition (D62), the ratio "(total of A-31 and A-32)/A-1" is preferably from 1.0/99.0 to 25.0/75.0, more preferably from 1.0/99.0 to 19.0/81.0.

In the condition (D63), the ratio "(total of A-31 and A-32)/A-1" is preferably 31.0/69.0 or less, more preferably 27.0/73.0 or less. In addition, in the condition (D63), the ratio "(total of A-31 and A-32)/A-1" is preferably from 1.0/99.0 to 31.0/69.0, more preferably from 1.0/99.0 to 27.0/73.0.

In the polycarbonate-polyorganosiloxane copolymer (S-6), the total content of the structural units (A-1), (A-31), and (A-32) is preferably 70.0 mol% or more, more preferably 80.0 mol% or more, still more preferably 90.0 mol% or more, still more preferably 100.0 mol% in the polycarbonate block.

In each of the conditions (C1), (C2), (C3), (C41), (C42), (C43), (C51), (C52), (C53), (C61), (C62), and (C63), the content "x" is preferably 2.0 mass% or more, more preferably 3.0 mass% or more.

In each of the conditions (D1), (D2), (D3), (D41), (D42), (D43), (D51), (D52), (D53), (D61), (D62), and (D63), the content "x" is preferably 4.3 mass% or more, more preferably 4.5 mass% or more, and is preferably 9.0 mass% or less, more preferably 6.0 mass% or less. In addition, the content "x" in each of those conditions is preferably from 4.3 mass% to 9.0 mass%, more preferably from 4.5 mass% to 6.0 mass%.

### <Polycarbonate-based Resin (P)>

An example of the polycarbonate-based resin (P) is a polycarbonate-based resin that is free of the repeating structure (A-2) of the structure represented by the formula (XX), includes the structural unit (A-1) represented by the formula (1), and may include at least one structural unit (A-3) selected from the structures represented by the formulae (3) and (4).

In addition, an example of the polycarbonate-based resin (P) is a polycarbonate-polyorganosiloxane copolymer including a polycarbonate block free of the structural unit (A-1) represented by the formula (1) and the polyorganosiloxane block including the repeating structure (A-2) of the structure represented by the formula (XX).

Examples of the structural unit (A-1), the structural unit (A-3), and the repeating structure (A-2) included in the polycarbonate-based resin (P) include the same units as the structural unit (A-1), the structural unit (A-3), and the repeating structure (A-2) included in the above-mentioned polycarbonate-based resin (S) and the above-mentioned polycarbonate-polyorganosiloxane copolymer (A). Preferred forms thereof are also the same.

### <Method of producing Polycarbonate-polyorganosiloxane Copolymer (A)>

The polycarbonate-polyorganosiloxane copolymer (A) included in the polycarbonate-based resin (S) may be produced by using, for example, a diol monomer (a1) and a polyorganosiloxane (a2), and a diol monomer (a3) as required as raw material monomers.

### <<Diol Monomer (a1)>>

The diol monomer (a1) has a structure represented by the following formula (1a). The diol monomer (a1) preferably includes a diol represented by the following formula (11a), and is more preferably formed of the diol represented by the following formula (11a).

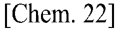

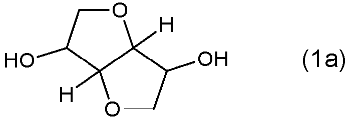

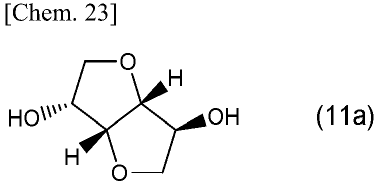

### <<Diol Monomer (a3)>>

When the polycarbonate-polyorganosiloxane copolymer (A) includes the structural unit (A-3), the raw material monomers further include the diol monomer (a3).

The diol monomer (a3) is preferably at least one diol selected from structures represented by the formulae (3a) and (4a).

[Chem. 24] HO-R¹¹-OH (3a) HO-CH₂-R¹²-CH₂-OH (4a)

In the formulae (3a) and (4a), R¹¹ and R¹² are as described above, and preferred examples thereof are also the same as those described above.

The diol monomer (a1) is not included in the diol monomer (a3).

### <<Polyorganosiloxane (a2)>>

The polyorganosiloxane (a2) preferably includes a polyorganosiloxane structure represented by the following formula (21a).

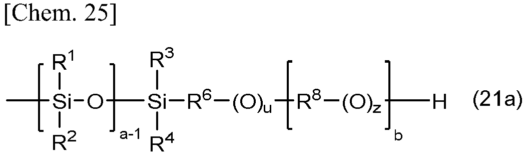

In the formula (21a), R¹ to R⁸, "a", "b", "u"and "z" are as described above, and preferred examples thereof are also the same as those described above. However, "z" that is present at the terminal represents 1, that is, hydrogen atoms at both the terminals are each bonded to an oxygen atom.

The polyorganosiloxane (a2) preferably includes a polyorganosiloxane represented by the following formula (22a). 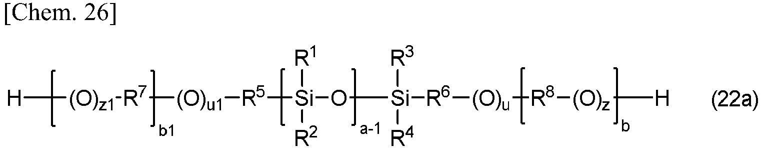 In the formula (22a), R¹ to R⁸, "a", "b", "u", u1, "z", and z1 are as described above, and preferred examples thereof are also the same as those described above. However, "z" and z1 that are present at both the terminals each represent 1, that is, hydrogen atoms at both the terminals are each bonded to an oxygen atom.

The polyorganosiloxane (a2) preferably includes at least one of polyorganosiloxanes represented by the following formulae (23a) to (26a).

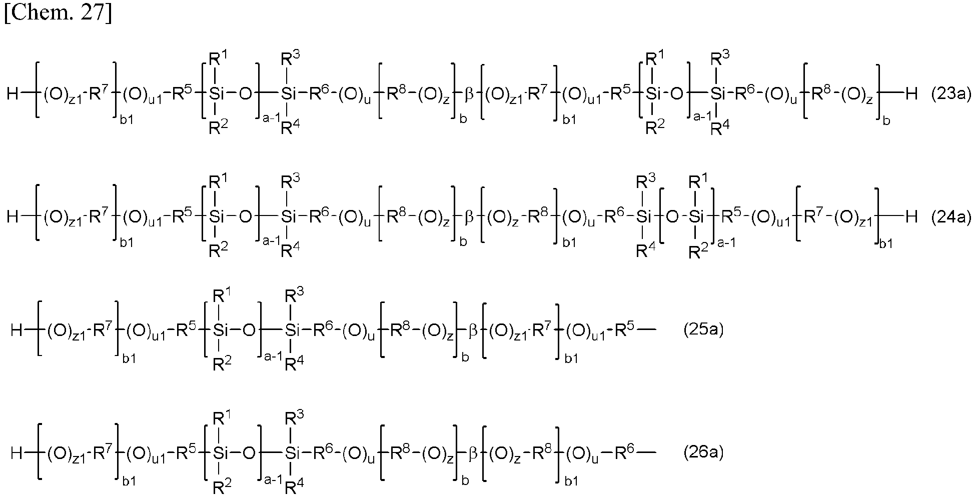

In the formulae (23a) to (26a), R¹ to R⁸, "a", "b", b1, "u", u1, "z", z1, and β are as described above, and preferred examples thereof are also the same as those described above. However, in the formulae (23a) to (26a), "z" and z1 that are present at the terminals each represent 1, that is, hydrogen atoms at the terminals are each bonded to an oxygen atom.

A method of producing the polyorganosiloxane (a2) is not particularly limited. According to, for example, a method described in JP 11-217390 A, the polyorganosiloxane may be obtained by: causing a cyclotrisiloxane and a disiloxane to react with each other in the presence of an acidic catalyst to synthesize an α,ω-dihydrogen organopentasiloxane; and then subjecting the α,ω-dihydrogen organopentasiloxane to an addition reaction with an oligomer or a polymer (e.g., a polyalkylene ether, a polyester, or a polycarbonate) having one terminal modified with an allyl group in the presence of a catalyst for a hydrosilylation reaction. In addition, according to a method described in JP 2662310 B2, the polyorganosiloxane may be obtained by: causing octamethylcyclotetrasiloxane and tetramethyldisiloxane to react with each other in the presence of sulfuric acid (acidic catalyst); and subjecting the resultant α,ω-dihydrogen organopolysiloxane to an addition reaction with the oligomer or the polymer having one terminal modified with an allyl group in the presence of the catalyst for a hydrosilylation reaction in the same manner as that described above. The α,ω-dihydrogen organopolysiloxane may be used after its average chain length has been appropriately adjusted by its polymerization conditions, or a commercially available α,ω-dihydrogen organopolysiloxane may be used. In addition, the oligomer having one terminal modified with an allyl group may be used after its average number of repeating units has been appropriately adjusted by its polymerization conditions, or a commercially available one-terminal allyl group-modified oligomer may be used. A one-terminal allyl group-modified polyethylene glycol out of the one-terminal allyl group-modified oligomers may be produced with reference to, for example, JP 5652691 B2. In addition, a commercially available allyl group-modified polyethylene glycol is, for example, UNIOX PKA-5001, UNIOX PKA-5002, UNIOX PKA-5003, UNIOX PKA-5004, or UNIOX PKA-5005 manufactured by NOF Corporation.

The polycarbonate-polyorganosiloxane copolymer (A) may be produced by polymerizing a mixture of raw material monomers by an interfacial polymerization method or a melt polymerization method (transesterification method). When the copolymer is produced by the interfacial polymerization method, a method described in, for example, JP 2014-80462 A may be adopted. The polycarbonate-polyorganosiloxane copolymer (A) may be produced by causing the polyorganosiloxane (a2), the diol monomer (a1), and a carbonic acid ester compound to be described later, which are raw material monomers, to react with each other by the melt polymerization method preferably in the presence of a basic catalyst. The diol monomer (a3) may be used as the raw material monomer as required. In addition, the polymerization reaction may be performed by further adding a terminal stopper.

The melt polymerization method does not require a solvent such as methylene chloride, which is required in the interfacial polymerization method, and hence the melt polymerization method is environmentally and economically advantageous. In addition, the melt polymerization method does not use phosgene having high toxicity, which is used in the interfacial polymerization method, and hence the melt polymerization method is advantageous in terms of production. Accordingly, the polycarbonate-polyorganosiloxane copolymer (A) is preferably produced by the melt polymerization method.

### (Carbonic Acid Ester Compound)

Examples of the carbonic acid ester compound may include a diaryl carbonate compound, a dialkyl carbonate compound, and an alkyl aryl carbonate compound.

Examples of the diaryl carbonate compound include a compound represented by the following formula (41) and a compound represented by the following formula (42):

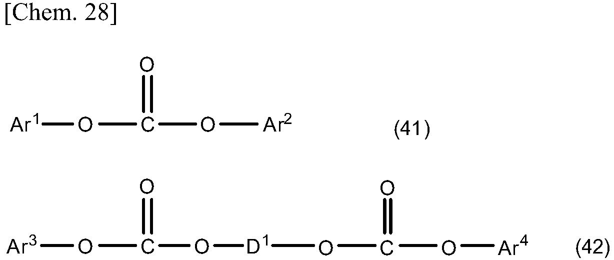

In the formulae (41) and (42), Ar¹ and Ar² each represent an aryl group, and may be identical to or different from each other. In the formula (42), Ar³ and Ar⁴ each represent an aryl group, and may be identical to or different from each other, and D¹ represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the dialkyl carbonate compound include a compound represented by the following formula (43) and a compound represented by the following formula (44).

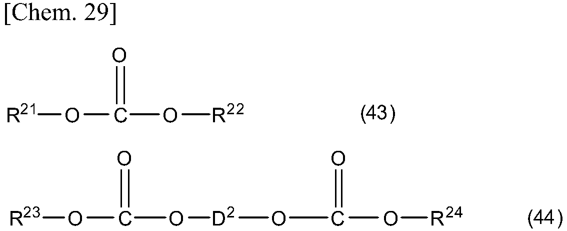

In the formulae (43) and (44), R²¹ and R²² each represent an alkyl group having 1 to 20 carbon atoms or a cycloalkyl group having 4 to 20 carbon atoms, and may be identical to or different from each other. In the formula (14), R²³ and R²⁴ each represent an alkyl group having 1 to 20 carbon atoms or a cycloalkyl group having 4 to 20 carbon atoms, and may be identical to or different from each other, and D² represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the alkyl aryl carbonate compound include a compound represented by the following formula (45) and a compound represented by the following formula (46).

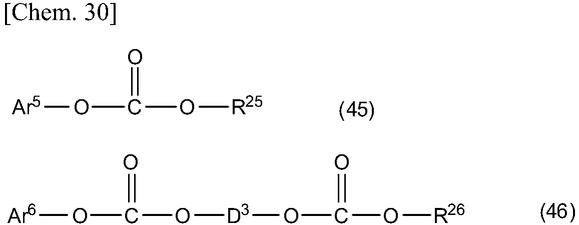

In the formulae (45) and (46), Ar⁵ represents an aryl group, and R²⁵ represents an alkyl group having 1 to 20 carbon atoms or a cycloalkyl group having 4 to 20 carbon atoms. In the formula (46), Ar⁶ represents an aryl group, R²⁶ represents an alkyl group having 1 to 20 carbon atoms or a cycloalkyl group having 4 to 20 carbon atoms, and D³ represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the diaryl carbonate compound include diphenyl carbonate, ditolyl carbonate, bis(chlorophenyl) carbonate, dinaphthyl carbonate, bis(diphenyl) carbonate, and bisphenol A bisphenyl carbonate.

Examples of the dialkyl carbonate compound include diethyl carbonate, dimethyl carbonate, dibutyl carbonate, dicyclohexyl carbonate, and bisphenol A bismethyl carbonate.

Examples of the alkyl aryl carbonate compound include methyl phenyl carbonate, ethyl phenyl carbonate, butyl phenyl carbonate, cyclohexyl phenyl carbonate, and bisphenol A methyl phenyl carbonate.

A preferred carbonic acid ester compound is diphenyl carbonate.

One kind or two or more kinds of carbonic acid ester compounds may be used in the production of the polycarbonate-polyorganosiloxane copolymer (A).

### (Terminal Stopper)

In the production of the polycarbonate-polyorganosiloxane copolymer (A), a terminal stopper may be used as required. Any known terminal stopper in the production of a polycarbonate resin may be used as the terminal stopper. Specific examples thereof may include the following compounds: phenol, *p*-cresol, *p*-*tert*-butylphenol, *p*-*tert*-octylphenol, *p-*cumylphenol, *p*-nonylphenol, and *p*-*tert*-amylphenol. Those monohydric phenols may be used alone or in combination thereof.

### (Branching Agent)

In the production of the polycarbonate-polyorganosiloxane copolymer (A), a branching agent may be used. Examples of the branching agent include phloroglucin, trimellitic acid, 1,1,1-tris(4-hydroxyphenyl)ethane, 1-[α-methyl-α-(4'-hydroxyphenyl)ethyl]-4-[α',α'-bis(4"-hydroxyphenyl)ethyl]benzene, α,α',α"-tris(4-hydroxyphenyl)-1,3,5-triisopropylbenzene, and isatinbis(*o*-cresol).

Specifically, the polycarbonate-polyorganosiloxane copolymer (A) may be produced by the melt polymerization method in accordance with, for example, the following procedure.

A mixture of raw material monomers containing the diol monomer (a1), the polyorganosiloxane (a2), and the carbonic acid ester compound is subjected to a transesterification reaction. The mixture of the raw material monomers may contain the diol monomer (a3) as required. The amount of the carbonic acid ester compound is preferably from 0.9 times to 1.2 times, more preferably from 0.95 times to 1.05 times as large as the total amount of the diol monomers (a1) and (a3) in terms of mol.

When the diol monomers (a1) and (a3) each have volatility higher than that of the carbonic acid ester compound under polymerization conditions, the ratio of the amount of the carbonic acid ester compound to the total amount of the diol monomers (a1) and (a3) is preferably 1 or less.

When the diol monomers (a1) and (a3) each have volatility lower than that of the carbonic acid ester compound under the polymerization conditions, the ratio of the amount of the carbonic acid ester compound to the total amount of the diol monomers (a1) and (a3) is preferably 1 or more.

When the ratio of the amount of the carbonic acid ester compound to the total amount of the diol monomers (a1) and (a3) is adjusted within the above-mentioned ranges, the number-average molecular weight and weight-average molecular weight of the polycarbonate-polyorganosiloxane copolymer (A) to be obtained can be increased.

At the time of the above-mentioned transesterification reaction, when the terminal stopper is used, the terminal stopper is preferably present in an amount within the range of from 0.05 mol% to 10 mol% with respect to the total amount of the diol monomer (a1), the polyorganosiloxane (a2), and the polyorganosiloxane (a3) as required from the viewpoint that the hydroxy group terminal of the polycarbonate-polyorganosiloxane copolymer (A) to be obtained is sufficiently capped, and hence a polycarbonate resin excellent in heat resistance and water resistance is obtained. The terminal stopper is more preferably present in an amount of from 1 mol% to 6 mol% with respect to the total amount of the diol monomer (a1), the polyorganosiloxane (a2), and the polyorganosiloxane (a3) as required. The total amount of the terminal stopper may be added to a reaction system in advance, or the following may be adopted: part of the terminal stopper is added to the reaction system in advance, and the remainder thereof is added thereto along with the progress of the reaction.

The transesterification reaction is preferably performed in the presence of an antioxidant by simultaneously loading the antioxidant into a reactor together with the diol monomer (a1), the polyorganosiloxane (a2), and the carbonic acid ester compound.

When the transesterification reaction is performed, a reaction temperature is not particularly limited, and the temperature may fall within, for example, the range of from 100°C to 260°C, and preferably falls within the range of from 100°C to 250°C. In addition, a method including gradually increasing the temperature from 150°C to 250°C in accordance with the progress of the reaction is preferred, and a method including gradually increasing the temperature from 170°C to 250°C is more preferred. When the temperature of the transesterification reaction is 100°C or more, a reaction rate sufficiently increases. Meanwhile, when the temperature is 250°C or less, a side reaction does not occur very frequently and a problem such as the coloring of the polycarbonate-polyorganosiloxane copolymer (A) to be produced hardly occurs.

The final temperature in the reactor is preferably 210°C or more, more preferably 225°C or more.

A reaction pressure is set in accordance with the vapor pressure of a monomer to be used or the reaction temperature. The pressure is not particularly limited as long as the pressure is set so that the reaction may be efficiently performed. For example, it is preferred that at the initial stage of the reaction, the pressure be set to an atmospheric pressure (normal pressure) or pressurized state ranging from 1.01×10⁵ Pa to 5.07×10⁶ Pa, and at the later stage of the reaction, the pressure be set to a decompressed state, and be set to from 1.33 Pa to 1.33×10³ Pa in the end.

The reaction only needs to be performed until a target molecular weight is obtained, and a reaction time is, for example, from 0.2 hour to 10 hours.

The above-mentioned transesterification reaction, which is performed, for example, in the absence of an inert solvent, may be performed in the presence of 1 part by mass to 150 parts by mass of the inert solvent with respect to 100 parts by mass of the polycarbonate resin to be obtained as required. Examples of the inert solvent include: aromatic compounds, such as diphenyl ether, a halogenated diphenyl ether, benzophenone, polyphenyl ether, dichlorobenzene, and methylnaphthalene; and cycloalkanes, such as tricyclo[5.2.1.0^{2,6}]decane, cyclooctane, and cyclodecane.

The reaction may be performed under an inert gas atmosphere as required, and examples of the inert gas include various gases including: gases, such as argon, carbon dioxide, dinitrogen monoxide, and nitrogen; alkanes, such as chlorofluorohydrocarbons, ethane, and propane; and alkenes, such as ethylene and propylene.

In the melt polymerization method, the basic catalyst is preferably used as a catalyst. The basic catalyst may be, for example, at least one kind selected from the group consisting of: a metal catalyst, such as an alkali metal compound or an alkaline earth metal compound; a nitrogen-containing compound; an organic catalyst such as a quaternary phosphonium salt containing an aryl group; and a metal compound. Those compounds may be used alone or in combination thereof.

At least one kind selected from the group consisting of: an organic acid salt, inorganic salt except a silicate, oxide, hydroxide, hydride, and alkoxide of an alkali metal or an alkaline earth metal; a quaternary ammonium hydroxide; and a quaternary phosphonium salt containing an aryl group is preferably used as the basic catalyst, and a hydroxide of an alkali metal is more preferably used. The basic catalysts may be used alone or in combination thereof.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenyl phosphate, disodium salt, dipotassium salt, dicesium salt, or dilithium salt of bisphenol A, and sodium salt, potassium salt, cesium salt, or lithium salt of phenol.

Examples of the alkaline earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate, and barium diacetate.

Examples of the nitrogen-containing compound include: quaternary ammonium hydroxides having alkyl and aryl groups, such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; imidazoles, such as 2-methylimidazole, 2-phenylimidazole, and benzimidazole; and bases or basic salts, such as ammonia, tetramethylammonium borohydride, tetrabutylammonium borohydride, tetrabutylammonium tetraphenylborate, and tetraphenylammonium tetraphenylborate.

Examples of the metal compound include a zinc-aluminum compound, a germanium compound, an organotin compound, an antimony compound, a manganese compound, a titanium compound, and a zirconium compound.

Specific examples of the quaternary phosphonium salt containing an aryl group include: tetra(aryl or alkyl)phosphonium hydroxides, such as tetraphenylphosphonium hydroxide, tetranaphthylphosphonium hydroxide, tetra(chlorophenyl)phosphonium hydroxide, tetra(biphenyl)phosphonium hydroxide, tetratolylphosphonium hydroxide, tetramethylphosphonium hydroxide, tetraethylphosphonium hydroxide, and tetrabutylphosphonium hydroxide; and tetramethylphosphonium tetraphenylborate, tetraphenylphosphonium bromide, tetraphenylphosphonium phenolate, tetraphenylphosphonium tetraphenylborate, methyltriphenylphosphonium tetraphenylborate, benzyltriphenylphosphonium tetraphenylborate, biphenyltriphenylphosphonium tetraphenylborate, tetratolylphosphonium tetraphenylborate, tetraphenylphosphonium phenolate, tetra(*p*-*t*-butylphenyl)phosphonium diphenylphosphate, triphenylbutylphosphonium phenolate, and triphenylbutylphosphonium tetraphenylborate.

The quaternary phosphonium salt containing an aryl group is preferably combined with a nitrogen-containing organic basic compound, and for example, a combination of tetramethylammonium hydroxide and tetraphenylphosphonium tetraphenylborate is preferred.

The usage amount of the basic catalyst may be selected from the range of preferably from 1×10⁻⁹ mol to 1×10⁻² mol, more preferably from 1×10⁻⁸ mol to 1×10⁻⁴ mol, still more preferably from 1×10⁻⁷ mol to 1×10⁻⁵ mol with respect to 1 mol of the diol monomer (a1) or 1 mol in total of the diol monomers (a1) and (a3).

A catalyst deactivator may be added at the later stage of the reaction. A known catalyst deactivator is effectively used as the catalyst deactivator to be used. Examples of the catalyst deactivator include a sulfonic acid ester, a sulfonic acid ammonium salt, and a sulfonic acid phosphonium salt.

When at least one kind of polymerization catalyst selected from alkali metal compounds and alkaline earth metal compounds is used, regarding the usage amount of the catalyst deactivator, the catalyst deactivator may be used at a ratio of preferably from 0.5 mol to 50 mol, more preferably from 1.0 mol to 30 mol, still more preferably from 5.0 mol to 15 mol per 1 mol of the catalyst.

The antioxidant is preferably mixed after the catalyst deactivator has been added to terminate the polymerization reaction.

The reaction in the melt polymerization method may be performed by any one of a continuous system and a batch system. A reactor to be used in melt polymerization may be any one of: a vertical reactor equipped with, for example, an anchor-type stirring blade, a max blend stirring blade, or a helical ribbon-type stirring blade; and a horizontal reactor equipped with, for example, a paddle blade, a lattice blade, or a spectacle blade. Further, the reactor may be an extruder type equipped with a screw. In the case of the continuous system, an appropriate combination of such reactors is preferably used.

### [Light Resistance Agent]

When the polycarbonate-based resin composition according to the present invention includes the above-mentioned polycarbonate-based resin (S) and the light resistance agent, the polycarbonate-based resin composition and the molded article thereof each exhibit the following effect: the composition and the molded article each have excellent impact resistance and excellent light resistance.

Specific examples of the light resistance agent include light resistance agents generally known as a UV absorber, a light resistance stabilizer, and a weather resistance agent.

When the polycarbonate-based resin composition includes the light resistance agent, from the viewpoint of further improving its light resistance, the content of the light resistance agent is preferably 0.01 part by mass or more, more preferably 0.03 part by mass or more, still more preferably 0.05 part by mass or more with respect to 100 parts by mass of the polycarbonate-based resin composition. From the viewpoint of balance between the impact resistance and scratch resistance of each of the polycarbonate-based resin composition and the molded article thereof, the content is preferably 3.0 parts by mass or less, more preferably 2.0 parts by mass or less, still more preferably 1.0 part by mass or less with respect thereto.

The polycarbonate-based resin composition according to the present invention may include one kind selected from a UV absorber and a light resistance stabilizer alone, or a combination of two or more kinds thereof as the light resistance agent.

The above-mentioned light resistance stabilizer is preferably an amine-based light resistance stabilizer, more preferably a hindered amine-based light resistance stabilizer.

### (UV Absorber)

The UV absorber is, for example, at least one kind selected from the group consisting of: a benzotriazole-based UV absorber; a benzoxazinone-based UV absorber; a salicylate-based UV absorber; a malonic acid ester-based UV absorber; an oxalylanilide-based UV absorber; a triazine-based UV absorber, a benzophenone-based UV absorber, and a cyanoacrylate-based UV absorber. Those UV absorbers may be used alone or in combination thereof. From the viewpoint of the light resistance, the UV absorber preferably includes at least one kind selected from the group consisting of: a benzotriazole-based UV absorber; and a benzoxazinone-based UV absorber, is more preferably at least one kind selected from the group consisting of: a benzotriazole-based UV absorber; and a benzoxazinone-based UV absorber, and is still more preferably a benzotriazole-based UV absorber.

Examples of the benzotriazole-based UV absorber include 2-(5-methyl-2-hydroxyphenyl)benzotriazole, 2-(2-hydroxy-4-octyloxyphenyl)benzotriazole, 2-[2-hydroxy-3,5-bis(α,α-dimethylbenzyl)phenyl]-2*H*-benzotriazole, 2-(3,5-di-*tert*-butyl-2-hydroxyphenyl)benzotriazole, 2-(3-tert-butyl-5-methyl-2-hydroxyphenyl)-5-chlorobenzotriazole, 2-(3,5-di-*tert*-butyl-2-hydroxyphenyl)-5-chlorobenzotriazole, 2-(3,5-di-*tert*-amyl-2-hydroxyphenyl)benzotriazole, 2-(2'-hydroxy-5'-*tert*-octylphenyl)benzotriazole, 2-[2-hydroxy-3-(3,4,5,6-tetra-hydrophthalimidomethyl)-5-methylphenyl]benzotriazole, 2,2'-methylenebis[4-(1,1,3,3-tetramethylbutyl)-6-(2*H*-benzotriazol-2-yl)phenol], and a condensate with methyl-3-[3-*tert*-butyl-5-(2*H*-benzotriazol-2-yl)-4-hydroxyphenyl]propionate-polyethylene glycol (molecular weight: about 300).

Among them, 2-[2-hydroxy-3,5-bis(α,α-dimethylbenzyl)phenyl]-2*H*-benzotriazole, 2-(2'-hydroxy-5'-*tert*-octylphenyl)benzotriazole, or 2,2'-methylenebis[4-(1,1,3,3-tetramethylbutyl)-6-(2*H*-benzotriazol-2-yl)phenol] is preferred, and 2,2'-methylenebis[4-(1,1,3,3-tetramethylbutyl)-6-(2*H*-benzotriazol-2-yl)phenol] is more preferred. Those UV absorbers may be used alone or as a mixture thereof.

A benzoxazinone-based compound may be, for example, a compound represented by the following formula (101).

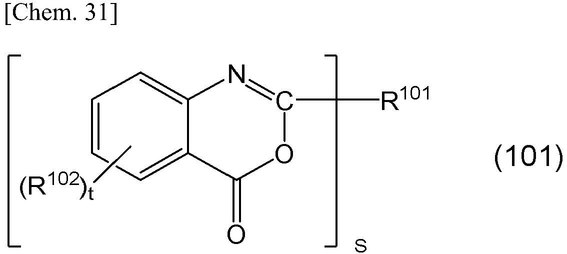

In the formula (101), R¹⁰¹ represents a residue obtained by removing "s" hydrogen atoms from a hydrocarbon compound having one or two aromatic rings in a molecule thereof. R¹⁰² represents a hydrogen atom, a halogen group, a nitro group, an alkyl group having 1 to 8 carbon atoms, an alkoxyl group having 1 to 8 carbon atoms, or an alkenyloxy group having 2 to 8 carbon atoms. "s" represents an integer of 2 or 3, and "t" represents an integer of from 1 to 4.

In the formula (101), R¹⁰¹ represents the residue obtained by removing "s" hydrogen atoms from the hydrocarbon compound having one or two aromatic rings in a molecule thereof, and examples thereof may include arylene groups, such as a phenylene group, a biphenylene group, and a naphthylene group. In R¹⁰², examples of the alkyl group having 1 to 8 carbon atoms may include a methyl group, an ethyl group, a propyl group, and a butyl group, examples of the alkoxyl group having 1 to 8 carbon atoms may include a methoxy group, an ethoxy group, a propoxy group, and a butoxy group, and examples of the alkenyloxy group having 2 to 8 carbon atoms may include an allyloxy group, a 2-propenyloxy group, a 2-butenyloxy group, and a 2-methyl-3-propenyloxy group.

Among the compounds each represented by the formula (101), 2,2'-(1,4-phenylene)bis(4*H*-3,1-benzoxazin-4-one) [*p*-phenylenebis(1,3-benzoxazin-4-one)] is preferred. 2,2'-(1,4-Phenylene)bis(4*H*-3,1-benzoxazin-4-one) is a compound represented by the following formula.

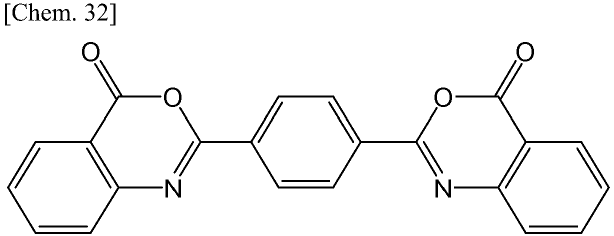

Examples of the salicylate-based UV absorber include phenyl salicylate, *p-tert-*butylphenyl salicylate, and *p*-octylphenyl salicylate. Examples of the malonic acid ester-based UV absorber include benzylidene bisdiethyl malonate, 4-methoxyphenyl-methylene-dimethyl ester, and tetraethyl-2,2'-(1,4-phenylene-dimethylidene)-bismalonate. An example of the oxalylanilide-based UV absorber is an oxalylanilide compound having a hydrocarbon group having 1 to 12 carbon atoms. In addition, an example of the triazine-based UV absorber is 2,4-diphenyl-6-(2-hydroxy-4-hexyloxyphenyl)-s-triazine.

### (Light Resistance Stabilizer)

The light resistance stabilizer is preferably, for example, an amine-based light resistance stabilizer.

The amine-based light resistance stabilizer is preferably a compound having a structure in which nitrogen serve as part of a cyclic structure, more preferably a compound having a piperidine structure. The piperidine structure defined here may be any structure as long as the piperidine structure has a saturated 6-membered cyclic amine structure, and the structure includes a structure in which part of the piperidine structure is substituted with a substituent. An example of the substituent which the piperidine structure may have is an alkyl group having 4 or less carbon atoms, and a methyl group is particularly preferred. The amine compound is still more preferably a compound having a plurality of piperidine structures. When the amine compound has a plurality of piperidine structures, a compound in which the piperidine structures are linked by an ester structure is preferred. In particular, a compound represented by the following formula is preferred.

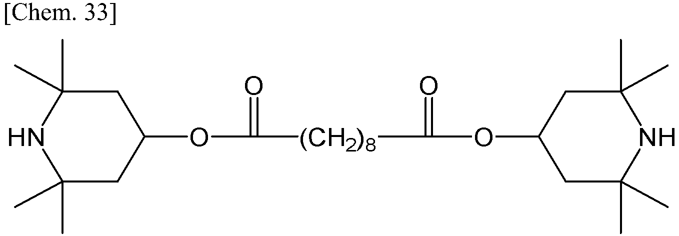

From the viewpoint of further improving balance between the tensile characteristics and light resistance of the polycarbonate-based resin composition according to the present invention, and from the viewpoint of balance between the impact resistance and scratch resistance thereof, the total content of the polycarbonate-based resin (S) and the light resistance agent in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin (S) and the light resistance agent is not particularly limited, but the total content is, for example, 100 mass% or less from the viewpoint of obtaining a polycarbonate-based resin composition having desired properties.

The content of the light resistance agent in the polycarbonate-based resin composition is preferably 0.01 part by mass or more, more preferably 0.03 part by mass or more, still more preferably 0.05 part by mass or more with respect to 100 parts by mass of the polycarbonate-based resin composition. From the viewpoint of balance between the impact resistance and scratch resistance of each of the polycarbonate-based resin composition and the molded article thereof, the content is preferably 5 parts by mass or less, more preferably 1.0 part by mass or less, still more preferably 0.5 part by mass or less with respect thereto.

### [Acrylic Resin]

When the polycarbonate-based resin composition according to the present invention includes the above-mentioned polycarbonate-based resin (S) and the acrylic resin, the polycarbonate-based resin composition and the molded article thereof each exhibit the following effect: the composition and the molded article each have excellent impact resistance and excellent scratch resistance.

When the polycarbonate-based resin composition includes the acrylic resin, from the viewpoint of further improving balance between its scratch resistance and scratch resistance, the content of the acrylic resin is preferably 1.0 part by mass or more, more preferably 5.0 parts by mass or more, still more preferably 10 parts by mass or more with respect to 100 parts by mass of the polycarbonate-based resin composition. From the viewpoint of balance between the impact resistance and scratch resistance of each of the polycarbonate-based resin composition and the molded article thereof, the content is preferably 60 parts by mass or less, more preferably 50 parts by mass or less, still more preferably 45 parts by mass or less with respect thereto.

The polycarbonate-based resin composition according to the present invention may include, as the acrylic resin, one kind selected from (co)polymers of a monomer selected from the group consisting of: acrylic acid; methacrylic acid; an acrylic acid ester; a methacrylic acid ester; acrylonitrile; and methacrylonitrile alone, or a combination of two or more kinds thereof. The term "(co)polymer" means a homopolymer or a copolymer.

Examples of the acrylic acid ester and the methacrylic acid ester (hereinafter collectively referred to as "(meth)acrylic acid ester") include methyl (meth)acrylate, benzyl (meth)acrylate, *n*-butyl (meth)acrylate, *i*-butyl (meth)acrylate, *t*-butyl (meth)acrylate, 2-ethylhexyl (meth)acrylate, lauryl (meth)acrylate, tridecyl (meth)acrylate, stearyl (meth)acrylate, glycidyl (meth)acrylate, hydroxypropyl (meth)acrylate, 2-methoxyethyl (meth)acrylate, 2-ethoxyethyl (meth)acrylate, cyclohexyl (meth)acrylate, isobornyl (meth)acrylate, norbornyl (meth)acrylate, dicyclopentenyl (meth)acrylate, dicyclopentanyl (meth)acrylate, dicyclopentenyloxyethyl (meth)acrylate, tetrahydrofurfuryl (meth)acrylate, acryl (meth)acrylate, 2-hydroxyethyl (meth)acrylate, pentamethylpiperidyl (meth)acrylate, tetramethylpiperidyl (meth)acrylate, dimethylaminoethyl (meth)acrylate, diethylaminoethyl (meth)acrylate, 2-(meth)acryloyloxyethyl succinate, 2-(meth)acryloyloxyethyl maleate, 2-(meth)acryloyloxyethyl phthalate, and 2-(meth)acryloyloxyethyl hexahydrophthalate. The term "(meth)acryloyl" means "acryloyl" and "methacryloyl".

From the viewpoint of further improving balance between the tensile characteristics, impact resistance, and scratch resistance of the polycarbonate-based resin composition according to the present invention, the total content of the polycarbonate-based resin (S) and the acrylic resin in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin (S) and the acrylic resin is not particularly limited, but the total content is, for example, 100 mass% or less from the viewpoint of obtaining a polycarbonate-based resin composition having desired properties.

### [Elastomer]

When the polycarbonate-based resin composition according to the present invention includes the above-mentioned polycarbonate-based resin (S) and the elastomer, the polycarbonate-based resin composition and the molded article thereof can each be expected to exhibit the following effect: the composition and the molded article each have excellent impact resistance and excellent chemical resistance. The elastomer is free of the above-mentioned acrylic resin.

When the polycarbonate-based resin composition includes the elastomer, its chemical resistance may be improved. The content of the elastomer is preferably 0.1 part by mass or more, more preferably 1.0 part by mass or more, still more preferably 3.0 parts by mass or more with respect to 100 parts by mass of the polycarbonate-based resin composition. From the viewpoint of balance between the impact resistance and scratch resistance of each of the polycarbonate-based resin composition and the molded article thereof, the content is preferably 20 parts by mass or less, more preferably 15 parts by mass or less, still more preferably 10 parts by mass or less with respect thereto.

Any resin except the above-mentioned acrylic resin may be used as the elastomer without particular limitation, and examples thereof include a rubbery graft polymer and a rubbery graft polymer latex. The rubbery graft polymer is preferably a rubbery graft polymer in which a rubber part has a structural unit derived from an acrylic acid ester, more preferably a rubbery graft polymer in which a rubber part has a structural unit derived from an acrylic acid ester and a structural unit derived from butadiene.

The polycarbonate-based resin composition according to the present invention may include one kind selected from the rubbery graft polymer and the rubbery graft polymer latex alone, or a combination of two or more kinds thereof as the elastomer.

Examples of the structural unit derived from an acrylic acid ester for forming the rubbery graft polymer include structural units derived from methyl acrylate, ethyl acrylate, butyl acrylate, 2-ethylhexyl acrylate, lauryl acrylate, stearyl acrylate, and *t*-butyl acrylate. The structural unit derived from an acrylic acid ester may include one kind or two or more kinds of those structural units.

Examples of the structural unit derived from butadiene for forming the rubbery graft polymer include structural units derived from butadiene and isoprene. The structural unit derived from butadiene may include one kind or two or more kinds of those structural units.

The rubbery graft polymer latex is obtained by polymerizing a vinyl monomer in the presence of a rubber latex including a structural unit derived from an acrylic acid ester and a structural unit derived from butadiene. Examples of the structural unit derived from an acrylic acid ester and structural unit derived from butadiene of the rubber latex include the same structural unit derived from an acrylic acid ester and the same structural unit derived from butadiene as those given as the rubber part of the rubbery graft polymer.

Examples of the vinyl monomer include: monofunctional monomers typified by acrylonitrile and a (meth)acrylic acid ester; and polyfunctional monomers, such as divinylbenzene, ethylene glycol dimethacrylate, butylene glycol diacrylate, triallyl cyanurate, triallyl isocyanurate, trimethylolpropane triacrylate, and pentaerythritol tetraacrylate. The vinyl monomers may be used alone or in combination thereof.

From the viewpoint of further improving balance between the tensile characteristics, impact resistance, and scratch resistance of the polycarbonate-based resin composition according to the present invention, the total content of the polycarbonate-based resin (S) and the elastomer in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin (S) and the elastomer is not particularly limited, but the total content is, for example, 100 mass% or less from the viewpoint of obtaining a polycarbonate-based resin composition having desired properties.

### [Colorant]

When the polycarbonate-based resin composition according to the present invention includes the above-mentioned polycarbonate-based resin (S) and the colorant, the polycarbonate-based resin composition and the molded article thereof each exhibit the following effect: the composition and the molded article each have excellent impact resistance and excellent designability.

When the polycarbonate-based resin composition includes the colorant, from the viewpoint of further improving the designability, the content of the colorant is preferably 0.01 part by mass or more, more preferably 0.03 part by mass or more, still more preferably 0.05 part by mass or more with respect to 100 parts by mass of the polycarbonate-based resin composition. From the viewpoint of balance between the impact resistance and scratch resistance of each of the polycarbonate-based resin composition and the molded article thereof, the content is preferably 3.0 parts by mass or less, more preferably 2.0 parts by mass or less, still more preferably 1.0 part by mass or less, particularly preferably 0.5 part by mass or less with respect thereto.

The polycarbonate-based resin composition according to the present invention may include, as the colorant, one kind selected from an inorganic pigment, an organic pigment, and an organic dye alone, or a combination of two or more kinds thereof.

Examples of the inorganic pigment include: carbon black; and oxide-based pigments, such as titanium oxide, zinc white, red iron oxide, chromium oxide, iron black, titanium yellow, zinc-iron-based brown, copper-chromium-based black, and copper-iron-based black.

Examples of the organic pigment and the organic dye include: phthalocyanine-based dyes and pigments; condensed polycyclic dyes and pigments, such as azo-based, thioindigo-based, perinone-based, perylene-based, quinacridone-based, dioxazine-based, isoindolinone-based, and quinophthalone-based dyes and pigments; and anthraquinone-based, perinone-based, perylene-based, methine-based, quinoline-based, heterocyclic-based, and methyl-based dyes and pigments.

From the viewpoint of further improving balance between the tensile characteristics, impact resistance, scratch resistance, and designability of the polycarbonate-based resin composition according to the present invention, the total content of the polycarbonate-based resin (S) and the colorant in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin (S) and the colorant is not particularly limited, but the total content is, for example, 100 mass% or less from the viewpoint of obtaining a polycarbonate-based resin composition having desired properties.

### [Effect Pigment Particle]

When the polycarbonate-based resin composition according to the present invention includes the above-mentioned polycarbonate-based resin (S) and the effect pigment particle, the polycarbonate-based resin composition and the molded article thereof each exhibit the following effect: the composition and the molded article each have excellent impact resistance and excellent designability.

When the polycarbonate-based resin composition includes the effect pigment particle, from the viewpoint of further improving the designability, the content of the effect pigment particle is preferably 0.1 part by mass or more, more preferably 0.3 part by mass or more, still more preferably 0.5 part by mass or more with respect to 100 parts by mass of the polycarbonate-based resin composition. From the viewpoint of balance between the impact resistance and scratch resistance of each of the polycarbonate-based resin composition and the molded article thereof, the content is preferably 10.0 parts by mass or less, more preferably 5.0 parts by mass or less, still more preferably 3.0 parts by mass or less with respect thereto.

The polycarbonate-based resin composition according to the present invention may include one kind selected from a metal particle and a light interference pigment alone, or a combination of two or more kinds thereof as the effect pigment particle.

Examples of the metal particle include a silver flake, a nickel flake, a gold flake, a titanium flake, and an aluminum flake. Among them, a silver flake and an aluminum flake are preferred.

The light interference pigment is a particle obtained by coating, with a metal or a metal oxide, an inorganic particle except the metal particle.

Examples of the inorganic particle except the metal particle include a glass flake, mica, an alumina flake, a silica flake, and a mica flake. Among them, a glass flake is preferred.

Examples of the metal with which the inorganic particle except the metal particle is coated include silver, nickel, gold, titanium, and aluminum. Among them, silver is preferred.

Examples of the metal oxide with which the inorganic particle except the metal particle is coated include silver oxide, titanium oxide, iron oxide, and aluminum oxide. Among them, titanium oxide is preferred.

Each of the inorganic particles except the metal particle, the metals with which the inorganic particle except the metal particle is coated, and the metal oxides with which the inorganic particle except the metal particle is coated may be used alone or in combination thereof.

The average particle diameter of the effect pigment particles is preferably 20 µm or more and 100 µm or less. When the average particle diameter of the effect pigment particles is set to 20 µm or more, the designability of each of the polycarbonate-based resin composition and the molded article thereof can be improved, and when the average particle diameter of the effect pigment particles is set to 100 µm or less, a reduction in impact resistance of each of the polycarbonate-based resin composition and the molded article thereof can be suppressed.

The average thickness of the effect pigment particles is preferably 1 µm or more and 10 µm or less. When the average thickness of the effect pigment particles is 1 µm or more, the effect pigment particles can be suppressed from being excessively crushed during the production process of each of the polycarbonate-based resin composition and the molded article thereof, and when the average thickness of the effect pigment particles is 10 µm or less, a reduction in moldability of the polycarbonate-based resin composition can be suppressed.

### [Inorganic Filler]

When the polycarbonate-based resin composition according to the present invention includes the above-mentioned polycarbonate-based resin (S) and the inorganic filler, the polycarbonate-based resin composition and the molded article thereof each exhibit the following effect: the composition and the molded article each have excellent impact resistance and excellent rigidity.

When the polycarbonate-based resin composition includes the inorganic filler, the inorganic filler is preferably included in an amount of 0.1 part by mass or more and 100 parts by mass or less with respect to 100 parts by mass of the polycarbonate-based resin composition. When the content of the inorganic filler is 0.1 part by mass or more, balance between the tensile characteristics and rigidity of the composition can be further improved. When the content of the inorganic filler is 100 parts by mass or less, for example, the moldability and impact resistance of the composition can be further improved.

From the viewpoint of further improving the balance between the tensile characteristics and the rigidity, the content of the inorganic filler in the polycarbonate-based resin composition according to the present invention is more preferably 0.5 part by mass or more, still more preferably 1.0 part by mass or more, still more preferably 2.0 parts by mass or more, still more preferably 3.0 parts by mass or more, still more preferably 4.0 parts by mass or more with respect to 100 parts by mass of the polycarbonate-based resin composition. From the viewpoint of further improving balance between the moldability, impact resistance, and scratch resistance of the composition, the content is more preferably 50 parts by mass or less, still more preferably 20 parts by mass or less, still more preferably 15 parts by mass or less, still more preferably 12 parts by mass or less with respect thereto.

The inorganic filler is, for example, at least one kind selected from the group consisting of: a glass filler (e.g., a glass fiber, a glass bead, a glass flake, or glass powder); a carbon fiber; dolomite; silica; diatomaceous earth; talc; clay; mica; asbestos; calcium silicate; montmorillonite; bentonite; and graphite. From the viewpoint of further improving the balance between the tensile characteristics and the rigidity, a glass filler, silica, and a carbon fiber are preferred, and a glass fiber is more preferred.

The polycarbonate-based resin composition according to the present invention may include one kind selected from a glass filler, silica, and a carbon fiber alone, or a combination of two or more kinds thereof as the inorganic filler.

A product commercially available as an additive for a thermoplastic resin may be arbitrarily used as talc. Talc is a hydrous silicate of magnesium, and contains a trace amount of aluminum oxide, calcium oxide, or iron oxide in addition to silicic acid and magnesium oxide serving as main components in some cases. Talc may contain such material. In addition, the average particle diameter of talc falls within the range of preferably 0.5 µm or more, more preferably 1 µm or more, and falls within the range of preferably 50 µm or less, more preferably 20 µm or less. The aspect ratio thereof falls within the range of, for example, 2 or more and 20 or less. The average particle diameter and the aspect ratio are determined in comprehensive consideration of, for example, any other component to be incorporated for achieving the fluidity of the resin composition at the time of its molding, and impact resistance, rigidity, and the like that the molded article is required to have. In addition, for example, talc subjected to surface treatment with a fatty acid or the like, or talc pulverized in the presence of a fatty acid or the like may also be used as talc.

When the glass fiber is blended as the inorganic filler into the polycarbonate-based resin composition according to the present invention, the rigidity of the molded article can be further improved. A fiber produced by using alkali-containing glass, low-alkali glass, or alkali-free glass as a material is preferred as the glass fiber, and the form of the fiber may be any one of, for example, the following forms: a roving, a milled fiber, and a chopped strand. In addition, the cross-section of the glass fiber may be a flat shape. The diameter of the glass fiber is preferably 3 µm or more and 30 µm or less, and a fiber having a length of 1 mm or more and 6 mm or less is preferably used. When the diameter of the glass fiber is 3 µm or more, the rigidity of the polycarbonate-based resin composition can be further improved, and when the diameter is 30 µm or less, the appearance of the molded article becomes satisfactory.

The fiber length of the glass fiber is, for example, 0.01 mm or more and 8 mm or less, preferably 0.1 mm or more and 6 mm or less. In addition, the fiber diameter thereof is, for example, about 0.1 µm or more and about 30 µm or less, preferably 0.5 µm or more and 25 µm or less. Those glass fibers may be used alone or as a mixture thereof.

A glass fiber subjected to surface treatment with, for example, a silane-based coupling agent, such as an aminosilane-based, epoxysilane-based, vinylsilane-based, or methacrylsilane-based coupling agent, a chromium complex compound, or a boron compound may be used for improving an affinity for the resin, and a glass fiber subjected to sizing treatment with a sizing agent may also be used. For example, MA-409C (average fiber diameter: 13 µm) or TA-409C (average fiber diameter: 23 µm) manufactured by Asahi Fiber Glass Co., Ltd., or T-511 (average fiber diameter: from 12 µm to 14 µm) manufactured by Nippon Electric Glass Co., Ltd. may be suitably used as such glass fiber.

When the polycarbonate-based resin composition according to the present invention includes talc as the inorganic filler, from the viewpoint of further improving balance between its tensile characteristics and rigidity, and the viewpoint of improving its dimensional stability, the content of the inorganic filler is preferably 0.5 part by mass or more, more preferably 1.0 part by mass or more, still more preferably 2.0 parts by mass or more, still more preferably 3.0 parts by mass or more, still more preferably 4.0 parts by mass or more with respect to 100 parts by mass of the polycarbonate-based resin composition. From the viewpoint of further improving balance between the moldability, impact resistance, and scratch resistance of the composition, the content is preferably 100 parts by mass or less, more preferably 50 parts by mass or less, still more preferably 20 parts by mass or less, still more preferably 15 parts by mass or less, still more preferably 12 parts by mass or less, still more preferably 10 parts by mass or less, still more preferably 8.0 parts by mass or less with respect thereto.

When the polycarbonate-based resin composition according to the present invention includes the glass fiber as the inorganic filler, from the viewpoint of further improving the balance between the tensile characteristics and the rigidity, and the viewpoint of improving the dimensional stability, the content of the inorganic filler is preferably 0.5 part by mass or more, more preferably 1.0 part by mass or more, still more preferably 2.0 parts by mass or more, still more preferably 3.0 parts by mass or more, still more preferably 4.0 parts by mass or more, still more preferably 6.0 parts by mass or more, still more preferably 8.0 parts by mass or more with respect to 100 parts by mass of the polycarbonate-based resin composition. From the viewpoint of further improving the moldability and impact resistance of the composition, and the viewpoint of further improving the appearance of the molded article, the content is preferably 100 parts by mass or less, more preferably 50 parts by mass or less, still more preferably 20 parts by mass or less, still more preferably 15 parts by mass or less, still more preferably 12 parts by mass or less with respect thereto.

From the viewpoint of further improving the balance between the tensile characteristics and the rigidity, the total content of the polycarbonate-based resin composition and the inorganic filler in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin composition and the inorganic filler is not particularly limited, but the total content is, for example, 100 mass% or less from the viewpoint of obtaining a resin composition having desired properties.

### [Flame Retardant]

When the polycarbonate-based resin composition according to the present invention includes the above-mentioned polycarbonate-based resin (S) and the flame retardant, the polycarbonate-based resin composition and the molded article thereof each exhibit the following effect: the composition and the molded article each have excellent impact resistance and excellent flame retardancy.

The flame retardant is, for example, at least one kind selected from the group consisting of: a phosphorus-based flame retardant; a halogen-based flame retardant; and a metal salt-based flame retardant, and from the viewpoint of further improving the flame retardancy of the composition, at least one kind selected from the group consisting of: a phosphorus-based flame retardant; and a metal salt-based flame retardant is preferred.

Examples of the phosphorus-based flame retardant include red phosphorus and a phosphoric acid ester-based flame retardant.

The phosphoric acid ester-based flame retardant is preferably free of any halogen, and examples thereof include flame retardants each formed of a monomer, an oligomer, or a polymer of a phosphoric acid ester, or a mixture thereof. Examples thereof include trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate, tri(2-ethylhexyl) phosphate, diisopropylphenyl phosphate, trixylenyl phosphate, tris(isopropylphenyl) phosphate, trinaphthyl phosphate, bisphenol A bisphosphate, hydroquinone bisphosphate, resorcin bisphosphate, resorcinol-diphenyl phosphate, trioxybenzene triphosphate, and substituted products and condensates thereof. Among them, a condensed phosphoric acid ester is preferred as the phosphoric acid ester-based flame retardant.

Examples of a commercially available phosphoric acid ester compound that may be used as the phosphoric acid ester-based flame retardant include triphenyl phosphate [TPP], trixylenyl phosphate [TXP], resorcinol bis(diphenyl phosphate) [CR733S], bisphenol A bis(diphenyl phosphate) [CR741], 1,3-phenylene-tetrakis(2,6-dimethylphenyl) phosphate [PX200], 1,4-phenylene-tetrakis(2,6-dimethylphenyl) phosphate [PX201L], and 4,4'-biphenylene-tetrakis(2,6-dimethylphenyl) phosphate [PX202] each manufactured by Daihachi Chemical Industry Co., Ltd.

The above-mentioned phosphoric acid ester-based flame retardant is obtained by a reaction of a dihydric phenol or a monohydric phenol represented by Ar-OH (Ar represents an aryl group) with phosphorus oxychloride.

Those phosphoric acid ester-based flame retardants may be used alone or in combination thereof. The phosphoric acid ester-based flame retardant is preferably 1,3-phenylene-tetrakis(2,6-dimethylphenyl) phosphate.

When the polycarbonate-based resin composition according to the present invention includes the phosphorus-based flame retardant as the flame retardant, from the viewpoint of further improving its flame retardancy, the content of the flame retardant is preferably 1.0 part by mass or more, more preferably 2.0 parts by mass or more, still more preferably 3.0 parts by mass or more, still more preferably 5.0 parts by mass or more, still more preferably 7.0 parts by mass or more with respect to 100 parts by mass of the polycarbonate-based resin composition. From the viewpoint of balance between the impact resistance and scratch resistance of each of the polycarbonate-based resin composition and the molded article thereof, the content is preferably 40 parts by mass or less, more preferably 30 parts by mass or less, still more preferably 20 parts by mass or less, still more preferably 15 parts by mass or less, still more preferably 12 parts by mass or less with respect thereto.

Examples of the halogen-based flame retardant include tetrabromobisphenol A (TBA), a halogenated polycarbonate and a copolymer of a halogenated polycarbonate, oligomers thereof (TBA carbonate oligomer), decabromodiphenyl ether, a TBA epoxy oligomer, a halogenated polystyrene, and a halogenated polyolefin. The halogen-based flame retardants may be used alone or in combination thereof.

Examples of the metal salt-based flame retardant include an organic alkali metal salt and an organic alkaline earth metal salt. The metal salt-based flame retardant preferably contains at least one kind selected from an organic alkali metal salt and an organic alkaline earth metal salt, and is more preferably at least one kind selected from an organic alkali metal salt and an organic alkaline earth metal salt.

As an organic sulfonic acid salt of the above-mentioned alkali metal or the alkaline earth metal (hereinafter sometimes collectively referred to as "alkali(ne earth) metal"), there are given, for example, a metal salt of a fluorine-substituted alkylsulfonic acid such as a metal salt of a perfluoroalkanesulfonic acid and an alkali metal or an alkaline earth metal, and a metal salt of an aromatic sulfonic acid and an alkali metal or an alkaline earth metal.

Examples of the alkali metal include lithium, sodium, potassium, rubidium, and cesium. Examples of the alkaline earth metal include beryllium, magnesium, calcium, strontium, and barium. Among them, the alkali metal is more preferred.

Among those alkali metals, potassium and sodium are preferred, and potassium is more preferred from the viewpoints of flame retardancy and thermal stability.

A potassium salt and a sulfonic acid alkali metal salt formed of another alkali metal may also be used in combination.

A perfluoroalkanesulfonic acid alkali metal salt is, for example, potassium perfluorobutanesulfonate, potassium trifluoromethanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, or rubidium perfluorohexanesulfonate. Those perfluoroalkanesulfonic acid alkali metal salts may be used alone or in combination thereof.

Here, the number of the carbon atoms of a perfluoroalkyl group is preferably from 1 to 18, more preferably from 1 to 10, still more preferably from 1 to 8.

Among them, potassium perfluorobutanesulfonate is preferred.

An aromatic sulfonic acid alkali(ne earth) metal salt is, for example, disodium diphenyl sulfide-4,4'-disulfonate, dipotassium diphenyl sulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenyl ether disulfonate, polysodium poly(2,6-dimethylphenylene oxide) polysulfonate, polysodium poly(1,3-phenylene oxide) polysulfonate, polysodium poly(1,4-phenylene oxide) polysulfonate, polypotassium poly(2,6-diphenylphenylene oxide) polysulfonate, lithium poly(2-fluoro-6-butylphenylene oxide) polysulfonate, potassium benzenesulfonate, sodium benzenesulfonate, sodium *p*-toluenesulfonate, strontium benzenesulfonate, magnesium benzenesulfonate, dipotassium *p*-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, a formalin condensate of sodium naphthalenesulfonate, or a formalin condensate of sodium anthracenesulfonate. Among them, potassium diphenylsulfone-3-sulfonate is preferred.

Among those aromatic sulfonic acid alkali(ne earth) metal salts, a sodium salt and a potassium salt are preferred.

Those metal salt-based flame retardants may be used alone or in combination thereof.

When the polycarbonate-based resin composition according to the present invention includes the metal salt-based flame retardant as the flame retardant, from the viewpoint of further improving its flame retardancy, the content of the flame retardant is preferably 0.01 part by mass or more, more preferably 0.02 part by mass or more, still more preferably 0.03 part by mass or more, still more preferably 0.04 part by mass or more with respect to 100 parts by mass of the polycarbonate-based resin composition. From the viewpoint of balance between the impact resistance and scratch resistance of each of the polycarbonate-based resin composition and the molded article thereof, the content is preferably 1.0 part by mass or less, more preferably 0.8 part by mass or less, still more preferably 0.6 part by mass or less, still more preferably 0.4 part by mass or less with respect thereto.

From the viewpoint of further improving balance between the tensile characteristics and flame retardancy of the polycarbonate-based resin composition according to the present invention, the total content of the polycarbonate-based resin composition and the flame retardant in the polycarbonate-based resin composition according to the present invention is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more when the whole content of the polycarbonate-based resin composition is set to 100 mass%. The upper limit of the total content of the polycarbonate-based resin composition and the flame retardant is not particularly limited, but the total content is, for example, 100 mass% or less from the viewpoint of obtaining a resin composition having desired properties.

When the polycarbonate-based resin composition according to the present invention includes at least two or more kinds selected from the group consisting of: a light resistance agent; an effect pigment particle; a colorant; an inorganic filler; an elastomer; and a flame retardant, the polycarbonate-based resin composition can exhibit respective effects derived from the respective components.

The content of the polycarbonate-based resin (S) included in the polycarbonate-based resin composition according to the present invention varies depending on which of a UV absorber, a flame retardant, a polystyrene-based resin, a polyester-based resin, and an inorganic filler to be included in the polycarbonate-based resin composition is included. However, the content is preferably 60 mass% or more, more preferably 65 mass% or more, still more preferably 70 mass% or more, even still more preferably 85 mass% or more, particularly preferably 95 mass% or more, most preferably 99.0 mass% or more, and is preferably 99.99 mass% or less, more preferably 99.97 mass% or less, still more preferably 99.96 mass% or less.

The polycarbonate-based resin composition according to the present invention may include, in addition to the polycarbonate-based resin (S), the light resistance agent, the effect pigment particle, the colorant, the inorganic filler, the elastomer, the flame retardant, and the acrylic resin, an additive, such as a hydrolysis resistance agent, an antioxidant, or a resin except the foregoing.

For example, the polycarbonate-based resin composition may include an antioxidant from the viewpoints of being able to prevent oxidative degradation at the time of its melting and preventing its coloring and the like due to the oxidative degradation.

The content of the antioxidant is preferably 0.001 part by mass or more and 0.5 part by mass or less, more preferably 0.01 part by mass or more and 0.3 part by mass or less, still more preferably 0.02 part by mass or more and 0.2 part by mass or less with respect to 100 parts by mass of the content of the polycarbonate-based resin composition. When the content of the antioxidant falls within the above-mentioned ranges, a sufficient antioxidant effect can be obtained, and mold deposit at the time of the molding of the composition can be suppressed.

### <Antioxidant>

The polycarbonate-based resin composition according to the present invention may appropriately include an antioxidant as long as the object of the present invention is not impaired.

The antioxidant can suppress the decomposition of a resin at the time of the production or molding of the polycarbonate-based resin composition. A known antioxidant may be used as the antioxidant, and at least one kind selected from a phosphorus-based antioxidant and a phenol-based antioxidant may be preferably used.

From the viewpoint of suppressing the oxidative deterioration of the molded article including the polycarbonate-based resin composition at the time of its molding at high temperature, the phosphorus-based antioxidant is preferably a phosphorus-based antioxidant having an aryl group, more preferably a compound represented by the following formula (102).

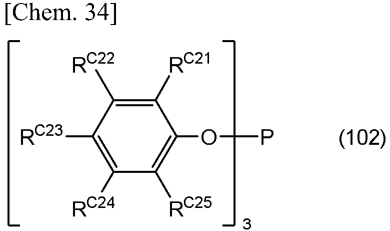

In the formula (102), R^{C21} to R^{C25} each represent a hydrogen atom, an alkyl group having 1 or more and 12 or less carbon atoms, or an aryl group having 6 or more and 14 or less carbon atoms, and may be identical to or different from each other. However, in terms of effects of the antioxidant, not all of R^{C21} to R^{C25} represent hydrogen atoms, and at least two of R^{C21} to R^{C25} each represent an alkyl group having 1 or more and 12 or less carbon atoms, or an aryl group having 6 or more and 14 or less carbon atoms. The compound in which any two of R^{C21} to R^{C25} each represent an alkyl group having 1 or more and 12 or less carbon atoms, or an aryl group having 6 or more and 14 or less carbon atoms, and the others each represent a hydrogen atom is preferred, and among the compounds in each of which any two of R^{C21} to R^{C25} each represent an alkyl group having 1 or more and 12 or less carbon atoms, or an aryl group having 6 or more and 14 or less carbon atoms, and the others each represent a hydrogen atom, the compound in which at least one of R^{C21} or R^{C25} represents an alkyl group having 1 to 12 carbon atoms, or an aryl group having 6 or more and 14 or less carbon atoms is more preferred.

Examples of the alkyl group having 1 or more and 12 or less carbon atoms include a methyl group, an ethyl group, a *n*-propyl group, an isopropyl group, various butyl groups, various pentyl groups, various hexyl groups, various octyl groups, various decyl groups, and various dodecyl groups. Among them, from the viewpoint of imparting long-term moist and heat resistance, and long-term heat resistance to the phosphorus-based antioxidant, one or more kinds selected from the group consisting of: a methyl group; an ethyl group; a *n*-propyl group; an isopropyl group; various butyl groups; various pentyl groups; various hexyl groups; and various octyl groups are preferred, one or more kinds selected from the group consisting of: a methyl group; an ethyl group; an isopropyl group; and a *tert*-butyl group are more preferred, and a *tert*-butyl group is still more preferred.

Examples of the aryl group having 6 or more and 14 or less carbon atoms include a phenyl group, a tolyl group, and a xylyl group. In particular, from the viewpoints of suppressing the heat decomposition of the phosphorus-based antioxidant and imparting excellent improving effects on long-term moist and heat resistance, and long-term heat resistance thereto, R^{C21} to R^{C25} each more preferably represent a hydrogen atom or an alkyl group having 1 or more and 12 or less carbon atoms, each still more preferably represent a hydrogen atom, a methyl group, an ethyl group, an isopropyl group, or a *tert*-butyl group, and each even still more preferably represent a hydrogen atom or a *tert*-butyl group.

The phosphorus-based antioxidant is particularly preferably the compound in which R^{C21} and R^{C23} each represent a *tert*-butyl group, and R^{C22}, R^{C24}, and R^{C25} each represent a hydrogen atom, that is, tris(2,4-di-*tert*-butylphenyl) phosphite.

Examples of the phosphorus-based antioxidant include triphenyl phosphite, diphenyl nonyl phosphite, diphenyl (2-ethylhexyl) phosphite, tris(2,4-di-*tert*-butylphenyl) phosphite, tris(nonylphenyl) phosphite, diphenyl isooctyl phosphite, 2,2'-methylenebis(4,6-di-*tert-*butylphenyl)octyl phosphite, diphenyl isodecyl phosphite, diphenyl mono(tridecyl) phosphite, phenyl diisodecyl phosphite, phenyl di(tridecyl) phosphite, tris(2-ethylhexyl) phosphite, tris(isodecyl) phosphite, tris(tridecyl) phosphite, dibutyl hydrogen phosphite, trilauryl trithiophosphite, tetrakis(2,4-di-*tert*-butylphenyl)-4,4'-biphenylene diphosphonite, 4,4'-isopropylidenediphenol dodecyl phosphite, 4,4'-isopropylidenediphenol tridecyl phosphite, 4,4'-isopropylidenediphenol tetradecyl phosphite, 4,4'-isopropylidenediphenol pentadecyl phosphite, 4,4'-butylidenebis(3-methyl-6-*tert*-butylphenyl)ditridecyl phosphite, bis(2,6-di-*tert-*butyl-4-methylphenyl)pentaerythritol diphosphite, bis(nonylphenyl)pentaerythritol diphosphite, distearyl-pentaerythritol diphosphite, phenyl bisphenol A pentaerythritol diphosphite, tetraphenyl dipropylene glycol diphosphite, 1,1,3-tris(2-methyl-4-di-tridecylphosphite-5-*tert*-butylphenyl)butane, 3,4,5,6-dibenzo-1,2-oxaphosphane, triphenylphosphine, diphenylbutylphosphine, diphenyloctadecylphosphine, tris(*p-*tolyl)phosphine, tris(*p*-nonylphenyl)phosphine, tris(naphthyl)phosphine, diphenyl(hydroxymethyl)phosphine, diphenyl(acetoxymethyl)phosphine, diphenyl (β-ethylcarboxyethyl)phosphine, tris(*p*-chlorophenyl)phosphine, tris(*p*-fluorophenyl)phosphine, benzyldiphenylphosphine, diphenyl(β-cyanoethyl)phosphine, diphenyl(*p-*hydroxyphenyl)phosphine, diphenyl(1,4-dihydroxyphenyl)-2-phosphine, phenylnaphthylbenzylphosphine, and bis(2,4-dicumylphenyl)pentaerythritol diphosphite.

Specific examples of the phosphorus-based antioxidant may include commercial products, such as "Irgafos 168" (manufactured by BASF Japan, trademark), "Irgafos 12" (manufactured by BASF Japan, trademark), "Irgafos 38" (manufactured by BASF Japan, trademark), "ADK STAB 329K" (manufactured by ADEKA Corporation, trademark), "ADK STAB PEP-36" (manufactured by ADEKA Corporation, trademark), "ADK STAB PEP-8" (manufactured by ADEKA Corporation, trademark), "Sandostab P-EPQ" (manufactured by Clariant AG, trademark), "Weston 618" (manufactured by GE, trademark), "Weston 619G" (manufactured by GE, trademark), "Weston 624" (manufactured by GE, trademark), and "Doverphos S-9228PC" (manufactured by Dover Chemical Corporation, trademark).

The phenol-based antioxidant is preferably a hindered phenol. Specific examples of the phenol-based antioxidant include triethylene glycol bis[3-(3-*tert*-butyl-5-methyl-4-hydroxyphenyl)propionate], 1,6-hexanediol-bis[3-(3,5-di-*tert*-butyl-4-hydroxyphenyl)propionate], pentaerythritol-tetrakis[3-(3,5-di-*tert*-butyl-4-hydroxyphenyl)propionate], octadecyl-3-(3,5-di-*tert*-butyl-4-hydroxyphenyl)propionate, 1,3,5-trimethyl-2,4,6-tris(3,5-di-*tert*-butyl-4-hydroxybenzyl)benzene, *N*,*N-*hexamethylenebis(3,5-di-*tert*-butyl-4-hydroxy-hydrocinnamide), 3,5-di-*tert*-butyl-4-hydroxybenzyl phosphonate diethyl ester, tris(3,5-di-*tert*-butyl-4-hydroxybenzyl)isocyanurate, and 3,9-bis[1,1-dimethyl-2-[β-(3-*tert*-butyl-4-hydroxy-5-methylphenyl)propionyloxy]ethyl]-2,4,8,10-tetraoxaspiro(5.5)undecane.

Specific examples of the phenol-based antioxidant may include commercial products, such as "Irganox 1010" (manufactured by BASF Japan, trademark), "Irganox 1076" (manufactured by BASF Japan, trademark), "Irganox 1330" (manufactured by BASF Japan, trademark), "Irganox 3114" (manufactured by BASF Japan, trademark), "Irganox 3125" (manufactured by BASF Japan, trademark), "BHT" (manufactured by Takeda Pharmaceutical Company Limited., trademark), "CYANOX 1790" (manufactured by SOLVAY S.A., trademark), and "SUMILIZER GA-80" (manufactured by Sumitomo Chemical Company, Limited, trademark).

The antioxidants may be used alone or in combination thereof. The content of the antioxidant in the polycarbonate-based resin composition according to the present invention is preferably 0.001 part by mass or more, more preferably 0.01 part by mass or more, still more preferably 0.04 part by mass or more, still more preferably 0.08 part by mass or more, and is preferably 1.0 part by mass or less, more preferably 0.50 part by mass or less, still more preferably 0.25 part by mass or less, still more preferably 0.15 part by mass or less with respect to 100 parts by mass of the polycarbonate-based resin composition. When a plurality of kinds of the antioxidants are used, the total amount thereof falls within the above-mentioned ranges.

In one embodiment, from the viewpoint of achieving both excellent scratch resistance and excellent impact resistance, the polycarbonate-based resin composition of the present invention is a polycarbonate-based resin composition, including: a polycarbonate-based resin (S) containing a polycarbonate-polyorganosiloxane copolymer (A); and at least one kind selected from the group consisting of: a light resistance agent; an elastomer; a colorant; an effect pigment particle; an inorganic filler; a flame retardant; and an acrylic resin, and the polycarbonate-polyorganosiloxane copolymer (A) may be the polycarbonate-polyorganosiloxane copolymer (S-1), (S-2), (S-3), (S-4), (S-5), or (S-6).

In a preferred embodiment, from the viewpoint of achieving both excellent scratch resistance and excellent impact resistance, the polycarbonate-based resin composition of the present invention is a polycarbonate-based resin composition, including: a polycarbonate-based resin (S) containing a polycarbonate-polyorganosiloxane copolymer (A); and at least one kind selected from the group consisting of: a light resistance agent; an elastomer; a colorant; an effect pigment particle; an inorganic filler; a flame retardant; and an acrylic resin, and the polycarbonate-polyorganosiloxane copolymer (A) may be the polycarbonate-polyorganosiloxane copolymer (S-1) or (S-2).

In a more preferred embodiment, from the viewpoint of achieving both excellent scratch resistance and excellent impact resistance, the polycarbonate-based resin composition of the present invention is a polycarbonate-based resin composition, including: a polycarbonate-based resin (S) containing a polycarbonate-polyorganosiloxane copolymer (A); and at least one kind selected from the group consisting of: a light resistance agent; an elastomer; a colorant; an effect pigment particle; an inorganic filler; a flame retardant; and an acrylic resin, and the polycarbonate-polyorganosiloxane copolymer (A) may be the polycarbonate-polyorganosiloxane copolymer (S-2).

A method of producing a polycarbonate-based resin composition according to the present invention is not particularly limited as long as the method includes a step of mixing the above-mentioned polycarbonate-based resin (S) and at least one kind selected from the group consisting of: a light resistance agent; an elastomer; a colorant; an effect pigment particle; an inorganic filler; a flame retardant; and an acrylic resin. For example, the polycarbonate-based resin composition may be produced by: mixing the above-mentioned polycarbonate-based resin (S) and at least one kind selected from the group consisting of: the light resistance agent; the elastomer; the colorant; the effect pigment particle; the inorganic filler; the flame retardant; and the acrylic resin with a mixer or the like; and melting and kneading the mixture. The melting and kneading may be performed by a typically used method, for example, a method using a ribbon blender, a Henschel mixer, a Banbury mixer, a drum tumbler, a single screw extruder, a twin screw extruder, a co-kneader, or a multi-screw extruder. A heating temperature at the time of the melting and kneading is appropriately selected, for example, within the range of from about 150°C to about 300°C, preferably the range of from about 220°C to about 300°C.

The Charpy impact strength of a molded piece obtained by molding the polycarbonate-based resin composition according to the present invention to provide a strip-shaped molded piece having a length of 80 mm, a width of 10 mm, and a thickness of 4 mm, and making a notch (r=0.25 mm±0.05 mm) in the strip-shaped molded piece by a post-process is preferably 5 kJ/m² or more, more preferably 10 kJ/m² or more, still more preferably 15 kJ/m² or more from the viewpoint of improving the impact resistance of the molded article to be obtained. From the viewpoint of further improving the impact resistance of the molded article of the polycarbonate-based resin composition to be obtained, the Charpy impact strength is preferably as high as possible, and hence the upper limit value thereof is not particularly limited. However, from the viewpoint of improving the tensile characteristics of the molded article, the Charpy impact strength is preferably 110 kJ/m² or less, more preferably 95 kJ/m² or less, still more preferably 85 kJ/m² or less.

The Charpy impact strength of the molded article of the polycarbonate-based resin composition can be increased as the ratio of the polyorganosiloxane block is increased, and when the ratio of the polyorganosiloxane unit (A-2) is high, the Charpy impact strength of the molded article of the polycarbonate-based resin composition according to the present invention is increased.

The Charpy impact strength may be measured in conformity with ISO-179-1:2010, and may be specifically measured by a method described in Examples to be described later.

Molding conditions for the above-mentioned molded piece are a cylinder temperature of from 200°C to 270°C and a mold temperature of from 80°C to 120°C. The cylinder temperature and a mold may be appropriately set in accordance with the glass transition temperature of the polycarbonate-based resin composition to be used. Specifically, the molded piece may be obtained by a method described in Examples to be described later.

From the viewpoint of improving the heat resistance of the molded article to be obtained, the deflection temperature under load of the molded article of the polycarbonate-based resin composition according to the present invention is preferably 112°C or more, more preferably 115°C or more. From the viewpoint of further improving the heat resistance of the molded article to be obtained, the deflection temperature under load is preferably as high as possible, and hence the upper limit value thereof is not particularly limited. However, from the viewpoint of improving the moldability of the composition, the temperature is preferably 150°C or less, more preferably 140°C or less, still more preferably 135°C or less.

The deflection temperature under load of the molded article of the polycarbonate-based resin composition can be increased as the ratio of rigid structural units is increased, and the deflection temperature under load of the molded article of the polycarbonate-based resin composition according to the present invention is increased as the ratio of the structural unit (A-1) represented by the formula (1) is increased.
the deflection temperature under load may be measured in conformity with Method A of ISO 527-1,2 (2020), and may be specifically measured by a method described in Examples to be described later.

From the viewpoint of improving the scratch resistance of the molded article to be resin composition according to the present invention is HB or more, preferably F or more. From the viewpoint of further improving the scratch resistance of the molded article to be obtained, the scratch hardness is preferably as high as possible, and hence the upper limit value thereof is not particularly limited.

The scratch hardness of the molded article of the polycarbonate-based resin composition can be increased as the ratio of rigid structural units is increased, and the scratch hardness of the molded article of the polycarbonate-based resin composition of the present invention is increased as the ratio of the structural unit (A-1) represented by the formula (1) is increased.

The scratch hardness may be measured in conformity with JIS K 5600-5-4:1999, and may be specifically measured by a method described in Examples to be described later.

From the viewpoint of improving the mechanical strength of the molded article to be obtained, a tensile modulus measured in conformity with ISO 527-1,2:2012 through use of a dumbbell-shaped tensile test piece Type A1 of JIS K 7139 obtained by molding the polycarbonate-based resin composition according to the present invention is preferably 2,400 MPa or more, more preferably 2,500 MPa or more, still more preferably 2,600 MPa or more, even still more preferably 2,700 MPa or more. From the viewpoint of further improving the impact resistance of the molded article to be obtained, the tensile modulus is preferably 10,000 MPa or less, more preferably 5,000 MPa or less, still more preferably 3,500 MPa or less.

The tensile modulus of the molded article of the polycarbonate-based resin composition can be increased as the ratio of rigid structural units is increased, and the tensile modulus of the molded article of the polycarbonate-based resin composition according to the present invention is increased as the ratio of the structural unit (A-1) represented by the formula (1) in the polycarbonate-based resin (S) is increased.

The tensile modulus may be set to a value measured under the conditions of a tensile speed of 1 mm/min and a measurement temperature of 23°C.

Molding conditions for the above-mentioned molded piece are a cylinder temperature of from 200°C to 270°C and a mold temperature of from 80°C to 120°C. The cylinder temperature and the mold temperature may be appropriately set in accordance with the glass transition temperature of the polycarbonate-based resin composition to be used.

From the viewpoint of improving the mechanical strength of the molded article to be obtained, a tensile strength (yield) measured in conformity with ISO 527-1,2:2012 through use of a dumbbell-shaped tensile test piece Type A1 of JIS K 7139 obtained by molding the polycarbonate-based resin composition according to the present invention is preferably 45 MPa or more, more preferably 50 MPa or more, still more preferably 55 MPa or more. From the viewpoint of further improving the impact resistance of the molded article to be obtained, the tensile strength (yield) is preferably 200 MPa or less, more preferably 150 MPa or less, still more preferably 100 MPa or less, still more preferably 80 MPa or less.

The tensile strength (yield) may be set to a value measured under the conditions of a tensile speed of 50 mm/min and a measurement temperature of 23°C.

Molding conditions for the above-mentioned molded piece are a cylinder temperature of from 200°C to 270°C, a mold temperature of 80°C, and a cycle time of 60 seconds. The cylinder temperature may be appropriately set in accordance with the glass transition temperature of the polycarbonate-based resin composition to be used.

From the viewpoint of further improving the heat resistance of the molded article to be obtained, the glass transition temperature of the polycarbonate-based resin composition according to the present invention is preferably 115°C or more, more preferably 120°C or more, still more preferably 130°C or more, even still more preferably 140°C or more. The glass transition temperature is preferably as high as possible, and hence the upper limit value thereof is not particularly limited. However, from the viewpoint of improving the processability of the composition, the glass transition temperature is preferably 200°C or less, more preferably 180°C or less, still more preferably 170°C or less.

The glass transition temperature of the polycarbonate-based resin composition can be increased as the ratio of rigid structural units is increased, and the glass transition temperature of the polycarbonate-based resin composition according to the present invention is increased as the ratio of the structural unit (A-1) represented by the formula (1) in the polycarbonate-based resin (S) is increased.

### 2. Molded Article

A molded article according to the present invention includes the above-mentioned polycarbonate-based resin composition. The molded article may be produced through use of a melt-kneaded product of the polycarbonate-based resin composition or a pellet thereof obtained through melting and kneading as a raw material by any one of, for example, an injection molding method, an injection compression molding method, an extrusion molding method, a blow molding method, a press molding method, a vacuum molding method, and an expansion molding method. In particular, the molded article is preferably produced through use of the resultant pellet by the injection molding method or the injection compression molding method.

The thickness of the molded article may be arbitrarily set in accordance with its applications. In particular, when the transparency of the molded article is required, the thickness is preferably from 0.2 mm to 4.0 mm, more preferably from 0.3 mm to 3.0 mm, still more preferably from 0.3 mm to 2.0 mm. When the thickness of the molded article is 0.2 mm or more, its warping does not occur and satisfactory mechanical strength is obtained.

A coating film formed of a hard coating film, an antifogging film, an antistatic film, or an antireflection film may be formed on the molded article as required, and a composite coating film formed of two or more kinds thereof may be formed.

Among them, a coating film formed of a hard coating film is preferably formed because the film has satisfactory light resistance and can prevent the wear of the surface of the molded article with time. A material for the hard coating film is not particularly limited, and a known material, such as an acrylate-based hard coating agent, a silicone-based hard coating agent, or an inorganic hard coating agent, may be used.

The polycarbonate-based resin composition according to the present invention is excellent in balance between the impact resistance and scratch resistance of a molded article thereof, and hence the polycarbonate-based resin composition can be suitably used in an impact-resistant application.

An example of the impact-resistant application is a construct having an external surface formed of the above-mentioned polycarbonate-based resin composition. More specific examples thereof include resin windows, touch panels, interior articles, exterior articles, interior parts or exterior parts of vehicles, housings, appliance parts, building materials, and OA instrument parts. The polycarbonate-based resin composition according to the present invention can be suitably used for producing the above-mentioned articles.

The molded article including the polycarbonate-based resin composition according to the present invention may be suitably used in, for example: (1) automobile parts, such as a sunroof, a door visor, a rear window, and a side window; (2) building parts, such as a building glass, a soundproof wall, a car port, a sunroom, and gratings; (3) windows for railway vehicles and ships; (4) parts for electrical instruments, such as various parts for a television, a radio-cassette recorder, a video camera, a video tape recorder, an audio player, a DVD player, a telephone, a display, a computer, a register, a copying machine, a printer, a facsimile, and the like, and respective parts for outer plates and housings thereof; (5) parts for precision instruments, such as casings and covers for precision machines, such as a cellular phone, a PDA, a camera, a slide projector, a watch, an electronic calculator, a measuring instrument, and display equipment; (6) agricultural parts, such as a plastic greenhouse and a greenhouse; and (7) furniture parts, such as a lighting cover, blinds, and interior tools.

### Examples

The present invention is described in more detail below by way of Examples, but the present invention is not limited to these Examples. In Examples, a polycarbonate-polyorganosiloxane copolymer is sometimes abbreviated as "PC-POS copolymer," and polydimethylsiloxane is sometimes abbreviated as "PDMS".

### 1. Evaluation of Polycarbonate-polyorganosiloxane Copolymer (A)

A pellet containing the PC-POS copolymer (A) produced in each of Production Examples described below was subjected to the following evaluations.

### (1) ¹H-NMR Measurement

On the basis of the integrated value of a peak derived from the following specific structure obtained by ¹H-NMR measurement under the following measurement conditions, the contents of the structural unit represented by the formula (XX), the structural unit (A-1), the structural unit (A-31), and the structural unit (A-32), the molar fraction of each of the structural unit (A-1), the structural unit (A-31), and the structural unit (A-32) with respect to the total amount of the structural unit represented by the formula (X) in the PC-POS copolymer, the content of the terminal structure represented by -OR^{T}, the average of "a"s in the PC-POS copolymer (A), and the average b2 when "b"s and b1s in the PC-POS copolymer (A) were combined were calculated.

### (Measurement Conditions)

NMR apparatus: ECA-500 manufactured by JEOL Resonance Co., Ltd.
Probe: corresponding to TH5 5φNMR sample tube
Observed range: -5 ppm to 15 ppm
Observation center: 5 ppm
Pulse repetition time: 9 sec
Flip angle: 45°
Number of scans: 256 times
NMR sample tube: 5 φ
Sample amount: 30 mg to 40 mg
Sample pretreatment: dried at 100°C for 6 hours (when the structural unit (A-32) is included)
Solvent: deuterated chloroform
Measurement temperature: room temperature
Correction of chemical shift: a peak derived from a proton of chloroform in deuterated chloroform was set to 7.26 ppm as a reference.
A: a peak integrated value at a δ of from 7.30 to 7.43
(A peak derived from a proton of chloroform in deuterated chloroform appears within this range, but does not affect the assignment of a structure because of a sufficient sample concentration.)
B: a peak integrated value at a δ of from -0.20 to 0.30
C: a peak integrated value at a δ of from 3.30 to 3.75
D: a peak integrated value at a δ of from 4.75 to 5.30
E: a peak integrated value at a δ of from 0.75 to 1.98
F: a peak integrated value at a δ of from 1.98 to 2.70
G: a peak integrated value at a δ of from 0.40 to 0.55
H: a peak integrated value at a δ of from 1.30 to 1.50
aa=A/2
bb=B/6
cc=C/4
dd=D/3 $ee = \left(E-F/6\times 8-G\right) / 10$
kk=G/2
ll=H/4

·A pellet containing the PC-POS copolymer (A) produced in each of Production Examples 1-1 to 1-4, and 2-1 and 2-2 ${T}^{1} = {aa}^{1} + {bb}^{1} + {cc}^{1} + {dd}^{1} + {ee}^{1}$ ${TX}^{1} = {dd}^{1} + {ee}^{1}$ ${f}^{1} = {aa}^{1} / {T}^{1} \times 100$ ${g}^{1} = {bb}^{1} / {T}^{1} \times 100$ ${h}^{1} = {cc}^{1} / {T}^{1} \times 100$ $\begin{matrix}{i}^{1} = {dd}^{1} / {T}^{1} \times 100 \\ {j}^{1} = {ee}^{1} / {T}^{1} \times 100\end{matrix}$ ${j}^{1} = {ee}^{1} / {T}^{1} \times 100$ |${TW}^{1} = {f}^{1} \times 93 + {g}^{1} \times 74.1 + {h}^{1} \times 44 + {i}^{1} \times 172 + {j}^{1} \times 170$
   Content (mass%) of structural unit (A-1): i¹×172/TW¹×100
   Content (mass%) of structural unit (A-32): j¹×170/TW¹×100
   Content (mass%) of terminal structure represented by -OR^{T}: f¹×93/TW¹×100
   Content (mass%) of polycarbonate block: (i¹×172+j¹×170)/TW¹×100
   Content (mass%) of structural unit represented by formula (XX): g¹×74.1/TW¹×100
   Content (mass%) of polyorganosiloxane block: (g¹×74.1+h¹×44)/TW¹×100
   Molar fraction of structural unit (A-1) with respect to total amount of structural unit represented by formula (X) in PC-POS copolymer: dd¹/TX¹×100
   Molar fraction of structural unit (A-32) with respect to total amount of structural unit represented by formula (X) in PC-POS copolymer: ee¹/TX¹×100
   Average of "a"s in PC-POS copolymer (A): bb¹/(kk¹/2)
   Average b2 in PC-POS copolymer (A): cc¹/kk¹
·A pellet containing the PC-POS copolymer (A) produced in each of Production Examples 3-1 to 3-3 ${T}^{3} = {aa}^{3} + {bb}^{3} + {cc}^{3} + {dd}^{3} + {ll}^{3}$ ${TX}^{3} = {dd}^{3} + {ll}^{3}$ ${f}^{3} = {aa}^{3} / {T}^{3} \times 100$ ${g}^{3} = {bb}^{3} / {T}^{3} \times 100$ ${h}^{3} = {cc}^{3} / {T}^{3} \times 100$ ${i}^{3} = {dd}^{3} / {T}^{3} \times 100$ ${j}^{3} = {ll}^{3} / {T}^{3} \times 100$ ${TW}^{3} = {f}^{3} \times 93 + {g}^{3} \times 74.1 + {h}^{3} \times 44 + {i}^{3} \times 172 + {j}^{3} \times 144$
   Content (mass%) of structural unit (A-1): i³×172/TW³×100
   Content (mass%) of structural unit (A-31): j³×144/TW³×100
   Content (mass%) of terminal structure represented by -OR^{T}: f³×93/TW³×100
   Content (mass%) of polycarbonate block: (i³×172+j³×144)/TW³×100
   Content (mass%) of structural unit represented by formula (XX): g³×74.1/TW³×100
   Content (mass%) of polyorganosiloxane block: (g³×74.1+h³×44)/TW³×100
   Molar fraction of structural unit (A-1) with respect to total amount of structural unit represented by formula (X) in PC-POS copolymer: dd³/TX³×100
   Molar fraction of structural unit (A-31) with respect to total amount of structural unit represented by formula (X) in PC-POS copolymer: ll³/TX³×100
   Average of "a"s in PC-POS copolymer (A): bb³/(kk³/2)
   Average b2 in PC-POS copolymer (A): cc³/kk³

### 2. Evaluation of Polycarbonate-based Resin Composition

A polycarbonate-based resin composition produced in each of Examples and Comparative Examples described below was subjected to the following evaluations.

### (1) ¹H-NMR Measurement

On the basis of the integrated value of a peak derived from the following specific structure obtained by ¹H-NMR measurement under the following measurement conditions, the contents of the structural unit represented by the formula (XX), the structural unit (A-1), and the structural unit (A-32), and the molar fraction of each of the structural unit (A-1) and the structural unit (A-32) with respect to the total amount of the structural unit represented by the formula (X) in the PC-POS copolymer were calculated.

### (Measurement Conditions)

NMR apparatus: ECA-500 manufactured by JEOL Resonance Co., Ltd.
Probe: corresponding to TH5 5φNMR sample tube
Observed range: -5 ppm to 15 ppm
Observation center: 5 ppm
Pulse repetition time: 9 sec
Flip angle: 45°
Number of scans: 256 times
NMR sample tube: 5 φ
Sample amount: 30 mg to 40 mg
Solvent: deuterated chloroform
Measurement temperature: room temperature
Correction of chemical shift: a peak derived from a proton of chloroform in deuterated chloroform was set to 7.26 ppm as a reference.
A²: a peak integrated value at a δ of from -0.20 to 0.30
B²: a peak integrated value at a δ of from 4.75 to 5.30
C²: a peak integrated value at a δ of from 0.75 to 1.98
D²: a peak integrated value at a δ of from 0.40 to 0.55
E²: a peak integrated value at a δ of from 2.23 to 2.28 ${aa}^{2} = {A}^{2} / 6$ ${bb}^{2} = \left({B}^{2}-{E}^{2}/2\right) / 3$ ${cc}^{2} = \left({C}^{2}-{E}^{2}\times 11-{D}^{2}\right) / 10$ ${dd}^{2} = {D}^{2} / 2$

·Pellet containing the polycarbonate-based resin composition produced in each of Example 1 and Comparative Example 1 ${T}^{2} = {aa}^{2} + {bb}^{2} + {cc}^{2}$ ${TX}^{2} = {bb}^{2} + {cc}^{2}$ ${f}^{2} = {aa}^{2} / {T}^{1} \times 100$ ${g}^{2} = {bb}^{2} / {T}^{1} \times 100$ ${h}^{2} = {cc}^{2} / {T}^{1} \times 100$ ${TW}^{2} = {f}^{2} \times 74.1 + {g}^{2} \times 172 + {h}^{2} \times 170$
   Content (mass%) of structural unit (A-1): g²×172/TW²×100
   Content (mass%) of structural unit (A-32): h²×170/TW²×100
   Content (mass%) of polycarbonate block: (g²×172+h²×170)/TW²×100
   Content (mass%) of structural unit represented by formula (XX): f²×74.1/TW²×100
   Molar fraction of structural unit (A-1) with respect to total amount of structural unit represented by formula (X) in PC-POS copolymer: bb²/TX²×100
   Molar fraction of structural unit (A-32) with respect to total amount of structural unit represented by formula (X) in PC-POS copolymer: cc²/TX²×100

### (2) Charpy Impact Strength

The polycarbonate-based resin composition produced in each of Examples 1 and 2, and Comparative Examples 1 and 2 described below was subjected to injection molding with an injection molding machine (10 cc Injection Moulding Machine, manufactured by DSM Xplore) at a cylinder temperature of 250°C and a mold temperature of 120°C to provide a strip-shaped test piece having a length of 80 mm, a width of 10 mm, and a thickness of 4 mm. Further, a notch (r=0.25 mm±0.05 mm) was made in the test piece by a post-process, and the Charpy impact strengths of the resultant test piece at -20°C, -10°C, and room temperature were measured with a Charpy impact tester (CHARPY IMPACT TESTER, model 611, manufactured by Toyo Seiki Seisaku-sho, Ltd.) in conformity with ISO 179-1:2010. A higher Charpy impact strength shows better impact resistance.

### (3) Deflection Temperature under Load

A strip-shaped test piece having a length of 80 mm, a width of 10 mm, and a thickness of 4 mm was produced from the polycarbonate-based resin composition produced in each of Examples 1 and 2, and Comparative Examples 1 and 2 described below by using an injection molding machine (10 cc Injection Moulding Machine, manufactured by DSM Xplore) at a cylinder temperature of 250°C and a mold temperature of 120°C.

The deflection temperature under load (load: 1.8 MPa) of the resultant strip-shaped test piece was measured in conformity with ISO 75-1,2:2020. A higher deflection temperature under load shows better heat resistance.

### (4) Scratch Hardness

A scratch hardness was measured by using the same test piece as that used for the measurement of the Charpy impact strength, the test piece being obtained from a pellet containing the polycarbonate-based resin composition produced in each of Examples and Comparative Examples described below, at a measurement temperature of 23°C and a load of 750 g in conformity with JIS K 5600-5-4:1999.

### (5) Number-average Molecular Weight (Mn) and Weight-average Molecular Weight (Mw)

The number-average molecular weight (Mn) and weight-average molecular weight (Mw) of a pellet containing each of polycarbonate-polyorganosiloxane copolymers (PC-POS 1 and PC-POS 2) produced in Production Examples described below were calculated by gel permeation chromatography (GPC) measurement under the following conditions.
Test machine: Waters Acquity e2695 APC
Column: TOSOH TSK-GEL SuperAWM-H×2
Solvent: dimethylformamide (DMF) containing 10 mM lithium bromide
Column temperature: 40°C
Flow rate: 0.6 mL/min
Detector: RI
Injection concentration: 0.1 w/v%
Injection volume: 20 µL

In the preparation of a calibration curve, a cubic equation obtained by approximation through a least-squares method through use of the following standard polystyrenes manufactured by Tosoh Corporation was used.

Standard polystyrenes: F-450, F-288, F-128, F-80, F-40, F-20, F-10, F-4, F-2, F-1, A-5000, A-2500, A-1000, and A-500

The number-average molecular weight (Mn) and weight-average molecular weight (Mw) of the pellet containing each of the polycarbonate-polyorganosiloxane copolymers (PC-POS 1 and PC-POS 2) produced in Production Examples described below were measured as described below. 10 mg of the above-mentioned pellet was weighed, and 10 mL of dimethylformamide containing 10 mM lithium bromide was added to completely dissolve the above-mentioned pellet. The resultant solution was filtered through a membrane filter, and was subjected to GPC measurement.

A differential molecular weight distribution curve may be obtained by such a method as described below. First, from a time curve (elution curve) of intensity distribution detected with a RI detector, a molecular weight distribution curve with respect to the logarithm (log(M)) of a molecular weight is determined by using a calibration curve. Next, an integral molecular weight distribution curve with respect to log(M) is obtained when the whole area of the distribution curve is set to 100%. After that, the integral molecular weight distribution curve is differentiated with respect to log(M). Thus, a differential molecular weight distribution curve with respect to log(M) can be obtained.

The number-average molecular weight (Mn) and weight-average molecular weight (Mw) are defined by the following equations through use of the number (Ni) of molecules each having a molecular weight (Mi) at each elution position of the resultant differential molecular weight distribution curve. $Mn = \sum \left(Ni⋅{Mi}^{2}\right) / \sum \left(Ni⋅Mi\right)$ $Mw = \sum \left(Ni⋅{Mi}^{2}\right) / \sum \left(Ni⋅Mi\right)$

A series of operations until the differential molecular weight distribution curve, and the number-average molecular weight (Mn) and the weight-average molecular weight (Mw) are obtained may be typically performed with analysis software built in a GPC measurement apparatus.

### (6) Viscosity-average Molecular Weight (Mv)

A viscosity-average molecular weight (Mv) was calculated from the following equation (Schnell's equation) by measuring the viscosity of a methylene chloride solution at 20°C with an Ubbelohde viscometer and determining an intrinsic viscosity [η] from the viscosity. [Math. 1] $\left[η\right] = 1.23 \times {10}^{- 5} \times {Mv}^{0.83}$

### 2. Production of Polycarbonate-polyorganosiloxane (PC-POS) Copolymer

### Production Example 1-1: Production of PC-POS 1-1

A polycarbonate-polyorganosiloxane PC-POS 1-1 was produced by the following method, and a pellet containing the resultant PC-POS 1-1 was evaluated by the above-mentioned methods. The results are shown in Table 1.

A diol monomer shown in Table 1, diphenyl carbonate (2,500.0 g/11.7 mol) at a molar fraction shown in Table 1 when the total amount of the diol monomers was set to 100, and a polyether-modified polyorganosiloxane PDMS-1 represented by the following formula (KF-6123, manufactured by Shin-Etsu Chemical Co., Ltd.) were loaded into a 10 L stainless steel-made reactor equipped with a stirring apparatus, a trap for trapping distilled phenol, and a decompression apparatus in amounts shown in Table 1 that became masses in the mass (theoretical value) of PC-POS 1-1 to be obtained shown in Table 1. The materials were completely melted at a temperature in the reactor of 100°C, and the inside of the reactor was purged with nitrogen.

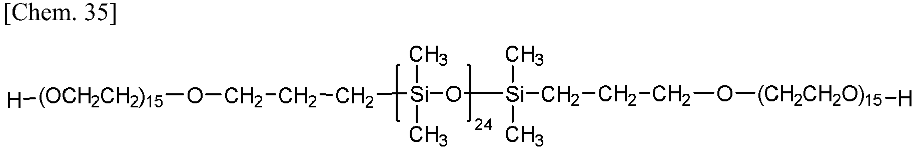

0.59 mL of 0.01 N sodium hydroxide was loaded to initiate polymerization. The temperature in the reactor was increased to 190°C and a pressure in the reactor was reduced to 150 mmHg over from about 50 minutes to about 100 minutes, and the conditions were held until the distillation amount of phenol became 1.6 L.

Next, the pressure in the reactor was reduced to 10 mmHg, and the condition was held until 2.0 L of phenol was distilled out.

Next, the temperature in the reactor was increased to 220°C over about 15 minutes and then held for about 10 minutes. After that, the temperature in the reactor was increased to the final polymerization temperature shown in Table 1 over about 10 minutes. After that, the pressure in the reactor was reduced to 1 mmHg or less, and a reaction was continued until a predetermined stirring torque was achieved. After that, nitrogen was introduced into the reactor to increase the pressure to normal pressure, and Irganox 1010 and Irgafos 168 were each loaded so that a content in a polymer to be obtained was 1,000 ppm, followed by stirring for 10 minutes or more. After that, high-pressure nitrogen was introduced into the reactor to extrude a resin strand from the bottom portion of the reactor. The resultant strand was cut with a pelletizer to provide a pellet containing PC-POS 1-1 serving as the polycarbonate-polyorganosiloxane copolymer (A). The resultant pellets each containing PC-POS 1-1 were each evaluated by the above-mentioned methods. The results are shown in Table 1.

The term "mass (theoretical value) of PC-POS 1-1 to be obtained" in the above-mentioned production conditions 1 refers to a mass obtained by subtracting the mass (theoretical value) of phenol, which is produced from loaded diphenyl carbonate, from the total of the loading mass of all the diol monomers, the loading mass of diphenyl carbonate, and the loading mass of PDMS-1.

### Production Examples 1-2 to 3-3: Production of PC-POSs 1-2 to 3-3

Pellets containing PC-POS 1-2 to PC-POS 3-3 were each obtained in the same manner as in Production Example 1-1 except that the diol monomer and the molar fraction thereof, the mass ratio of PDMS-1, and the final polymerization temperature were changed as shown in Tables 1 to 3. The resultant pellets containing PC-POS 1-2 to PC-POS 3-3 were each evaluated by the above-mentioned methods. The results are shown in Tables 1 to 3. The term "(A-31) to (A-34)" in the tables means (A-31), (A-32), (A-33), and (A-34).

### [Table 1]

**Table 1**

| | | | | PC-POS 1-1 | PC-POS 1-2 | PC-POS 1-3 |
|---|---|---|---|---|---|---|
| Raw material | Diol monomer | Isosorbide | Molar fraction *2 | 100.0 | 95.0 | 80.0 |
| | | 1,6-Hexanediol | | - | - | - |
| | | 1,4-Cyclohexanedimethanol | | - | 5.0 | 20.0 |
| | | Tricyclodecanedimethanol | | - | - | - |
| | Diphenyl carbonate | | | 102.0 | 102.0 | 99.0 |
| | PDMS-1 | | mass% *3 | 11.0 | 11.0 | 11.0 |
| Final polymerization temperature | | | °C | 250 | 250 | 240 |
| Evaluation | Structure represented by formula (X) | Structural unit (A-1) represented by formula (1) | Molar fraction *4 | 100.0 | 89.6 | 81.8 |
| | | Structural unit (A-31) represented by formula (31) *1 | | - | - | - |
| | | Structural unit (A-32) represented by formula (32) | | - | 10.4 | 18.8 |
| | | Structural unit (A-33) represented by formula (33) | | | | |
| | | Structural unit (A-1) represented by formula (1) | mass% *5 | 88.6 | 82.8 | 72.2 |
| | | Structural unit (A-31) represented by formula (31) *1 | | - | - | - |
| | | Structural unit (A-32) represented by formula (32) | | - | 5.5 | 15.9 |
| | | Structural unit (A-33) represented by formula (33) | | - | - | - |
| | | Total | mass% | 88.6 | 88.3 | 88.1 |
| | Terminal structure represented by -OR^{T} | | mass% *5 | 0.4 | 1.1 | 1.0 |
| | Polyorganosiloxane block | | | 11.0 | 10.6 | 10.9 |
| | Polvether block | | | 4.9 | 4.8 | 4.9 |
| | Structural unit represented by formula (XX) | | | 6.1 | 5.8 | 6.0 |
| | Structural unit (A-1)/[(A-1)+(XX)+(A-31) to (A-34)] | | | 93.2 | 87.0 | 75.9 |
| | Average of "a"s | | - | 24.2 | 24.3 | 24.7 |
| | Average b2 | | - | 14.9 | 14.9 | 15.1 |
| | Viscosity-average molecular weight (Mv) | | - | 16,200 | 16,900 | 16,100 |
| | Number-average molecular weight (Mn) | | In terms of PS | - | 10,300 | 11,100 |
| | Weight-average molecular weight (Mw) | | In terms of PS | - | 28,100 | 30,200 |

| | | | | | | |
|---|---|---|---|---|---|---|
| *1: n=6. *2: representing a molar fraction when the total amount of the diol monomers is set to 100. *3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass (theoretical value) of phenol produced from diphenyl carbonate]. *4: representing a molar fraction when the total amount of the structural units in the structure represented by the formula (X) is set to 100. *5: measured by methods described in Examples | | | | | | |

### [Table 2]

**Table 2**

| | | | | PC-POS 2-1 | PC-POS 2-2 |
|---|---|---|---|---|---|
| Raw material | Diol monomer | Isosorbide | Molar fraction *2 | 90.0 | 80.0 |
| | | 1,6-Hexanediol | | - | - |
| | | 1,4-Cyclohexanedimethanol | | 10.0 | 20.0 |
| | | Tricyclodecanedimethanol | | - | - |
| | Diphenyl carbonate | | | 98.0 | 99.0 |
| | PDMS-1 | | mass% *3 | 8.5 | 8.5 |
| Final polymerization temperature | | | °C | 240 | 240 |
| Evaluation | Structure represented by formula (X) | Structural unit (A-1) represented by formula (1) | Molar fraction *4 | 90.1 | 81.0 |
| | | Structural unit (A-31) represented by formula (31) *1 | | - | - |
| | | Structural unit (A-32) represented by formula (32) | | 9.9 | 19.0 |
| | | Structural unit (A-33) represented by formula (33) | | - | - |
| | | Structural unit (A-1) represented by formula (1) | mass% *5 | 82.2 | 74.2 |
| | | Structural unit (A-31) represented by formula (31) *1 | | - | - |
| | | Structural unit (A-32) represented by formula (32) | | 8.9 | 17.1 |
| | | Structural unit (A-33) represented by formula (33) | | - | - |
| | | Total | mass% | 91.1 | 91.3 |
| | Terminal structure represented by -OR^{T} | | mass% *5 | 0.5 | 0.4 |
| | Polyorganosiloxane block | | | 8.4 | 8.3 |
| | Polyether block | | | 3.7 | 3.7 |
| | Structural unit represented by formula (XX) | | | 4.7 | 4.6 |
| | Structural unit (A-1)/[(A-1)+(XX)+(A-31) to (A-34)] | | | 85.4 | 77.1 |
| | Average of "a"s | | - | 24.4 | 24.5 |
| | Average b2 | | - | 15.2 | 15.2 |
| | Viscosity-average molecular weight (Mv) | | - | 16,400 | 17,600 |
| | Number-average molecular weight (Mn) | | In terms of PS | - | - |
| | Weight-average molecular weight (Mw) | | In terms of PS | - | - |

| | | | | | |
|---|---|---|---|---|---|
| *1: n=6. *2: representing a molar fraction when the total amount of the diol monomers is set to 100. *3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass (theoretical value) of phenol produced from diphenyl carbonate]. *4: representing a molar fraction when the total amount of the structural units in the structure represented by the formula (X) is set to 100. *5: measured by methods described in Examples | | | | | |

### [Table 3]

**Table 3**

| | | | | PC-POS 3-1 | PC-POS 3-2 | PC-POS 3-3 |
|---|---|---|---|---|---|---|
| Raw material | Diol monomer | Isosorbide | Molar fraction *2 | 90.0 | 80.0 | 70.0 |
| | | 1,6-Hexanediol | | 10.0 | 20.0 | 30.0 |
| | | 1,4-Cyclohexanedimethanol | | - | - | - |
| | | Tricyclodecanedimethanol | | - | - | - |
| | Diphenvl carbonate | | | 98.0 | 97.0 | 95.0 |
| | PDMS-1 | | mass% *3 | 6.0 | 6.0 | 6.0 |
| Final polymerization temperature | | | °C | 240 | 240 | 240 |
| Evaluation | Structure represented by formula (X) | Structural unit (A-1) represented by formula (1) | Molar fraction *4 | 92.6 | 84.5 | 75.7 |
| | | Structural unit (A-31) represented by formula (31) *1 | | 7.4 | 15.5 | 24.3 |
| | | Structural unit (A-32) represented by formula (32) | | - | - | - |
| | | Structural unit (A-33) represented by formula (33) | | - | - | - |
| | | Structural unit (A-1) represented by formula (1) | mass% *5 | 87.5 | 80.1 | 73.4 |
| | | Structural unit (A-31) represented by formula (31) *1 | | 5.9 | 12.2 | 19.7 |
| | | Structural unit (A-32) represented by formula (32) | | - | - | - |
| | | Structural unit (A-33) represented by formula (33) | | - | - | - |
| | | Total | mass% | 93.4 | 92.3 | 93.1 |
| | Terminal structure represented by -OR^{T} | | mass% *5 | 0.5 | 1.3 | 0.8 |
| | Polyorganosiloxane block | | | 6.1 | 6.4 | 6.1 |
| | Polyether block | | | 2.7 | 2.9 | 2.7 |
| | Structural unit represented by formula (XX) | | | 3.4 | 3.5 | 3.4 |
| | Structural unit (A-1)/[(A-1)+(XX)+(A-31) to (A-34)] | | | 89.9 | 82.5 | 75.4 |
| | Average of "a"s | | - | 24.6 | 27.4 | 25.0 |
| | Average b2 | | - | 15.4 | 15.2 | 15.4 |
| | Viscosity-average molecular weight (Mv) | | - | 17,500 | 18,700 | 22,400 |
| | Number-average molecular weight (Mn) | | In terms of PS | - | - | - |
| | Weight-average molecular weight (Mw) | | In terms of PS | - | - | - |

| | | | | | | |
|---|---|---|---|---|---|---|
| *1: n=6. *2: representing a molar fraction when the total amount of the diol monomers is set to 100. *3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass (theoretical value) of phenol produced from diphenyl carbonate]. *4: representing a molar fraction when the total amount of the structural units in the structure represented by the formula (X) is set to 100. *5: measured by methods described in Examples | | | | | | |

### Examples 1-1 to 3-7 and Comparative Examples 1-1 to 3-4

As shown in Tables 4 to 8, PC-POS 1-1 to PC-POS 3-3 and a light resistance agent ("ADK STAB LA-77Y" manufactured by ADEKA Corporation, "KEMISORB 79" manufactured by Chemipro Kasei Kaisha, Ltd.), an effect pigment particle ("MC5090PS" manufactured by Nippon Glass Co., Ltd., or "ASTROSHINE NJ-80" manufactured by Nihonboshitsu Co., Ltd.), a colorant (a black mixed colorant obtained by mixing 10 mass% of "Macrolex Violet 3R" manufactured by Lanxess, 50 mass% of "Macrolex Green 5B" manufactured by Lanxess, 10 mass% of "Macrolex Blue RR" manufactured by Lanxess, and 30 mass% of "Diaresin Red A" manufactured by Arimoto Chemical Co., Ltd.), or an elastomer ("KANE ACE M-590" manufactured by Kaneka Corporation) were mixed, supplied to a compact desktop kneader (Micro 15 cc Twin Screw Compounder, manufactured by DSM Xplore), and subjected to melt kneading at a barrel temperature of 250°C and a screw rotation speed of 50 rpm. The molten resin was supplied to a desktop injection molding machine (Micro 10 cc Injection Moulding Machine, manufactured by DSM Xplore), and was evaluated for its Charpy impact strength, deflection temperature under load, and scratch hardness by the above-mentioned methods by using a molded article obtained at a cylinder temperature of 250°C and a mold temperature of 100°C. However, PC-POS 3-3 had a low glass transition point, and hence the above-mentioned barrel temperature was set to 210°C, the above-mentioned cylinder temperature was set to 210°C, and the above-mentioned mold temperature was set to 70°C in each of Comparative Examples each using PC-POS 3-3.

The results are shown in Tables 4 to 8.

### [Table 4]

**Table 4**

| | | | Example 1-1 | Example 1-2 | Comparative Example 1-1 | Example **1-**3 | Comparative Example 1-2 |
|---|---|---|---|---|---|---|---|
| PC-POS copolymer (A) | PC-POS 1-1 | Part(s) by mass | 100.0 | - | - | - | - |
| | PC-POS 1-2 | | - | 100.0 | - | 100.0 | - |
| | PC-POS 1-3 | | - | - | 100.0 | - | 100.0 |
| Light resistance agent | LA-77Y | | 0.1 | 0.1 | 0.1 | - | - |
| | KEMISORB 79 | | - | - | - | - | - |
| Effect pigment particle | MC5090PS | | - | - | - | 1.5 | 1.5 |
| | NJ-80 | | - | - | - | - | - |
| Colorant | Mixed colorant | | - | - | - | - | - |
| Elastomer | M-590 | | - | - | - | - | - |
| Evaluation result | Charpy impact strength (4 mmt, with notch, -20°C) | kJ/m² | 28 | 40 | 16 | - | - |
| | Charpy impact strength (4 mmt, with notch, -10°C) | kJ/m² | - | 61 | 48 | - | - |
| | Charpy impact strength (4 mmt, with notch, room temperature) | kJ/m² | - | - | - | 44 | 35 |
| | Deflection temperature under load | °C | - | 124 | 111 | - | - |
| | Scratch hardness | - | F | F | F | F | F |

### [Table 5]

**Table 5**

| | | | Example 1-4 | Example 1-5 | Comparative Example 1-3 | Example 1-6 | Comparative Example 1-4 | Example 1-7 | Comparative Example 1-5 |
|---|---|---|---|---|---|---|---|---|---|
| PC-POS copolymer (A) | PC-POS 1-1 | Part(s) by mass | 100.0 | - | - | - | - | - | - |
| | PC-POS 1-2 | | - | 100.0 | - | 100.0 | - | 100.0 | - |
| | PC-POS 1-3 | | - | - | 100.0 | - | 100.0 | - | 100.0 |
| Light resistance agent | LA-77Y | | - | - | - | - | - | - | - |
| | KEMISORB 79 | | - | - | - | - | - | 0.1 | 0.1 |
| Effect pigment particle | MC5090PS | | - | - | - | - | - | - | - |
| | NJ-80 | | - | - | - | - | - | - | - |
| Colorant | Mixed colorant | | 0.1 | 0.1 | 0.1 | - | - | - | - |
| Elastomer | M-590 | | - | - | - | 5.0 | 5.0 | - | - |
| Evaluation result | Charpy impact strength (4 mmt, with notch, -20°C) | kJ/m² | 37 | 43 | 29 | - | - | 65 | 36 |
| | Charpy impact strength (4 mmt, with notch, -10°C) | kJ/m² | - | - | - | 21 | 19 | - | - |
| | Charpy impact strength (4 mmt, with notch, room temperature) | kJ/m² | - | - | - | - | - | - | - |
| | Deflection temperature under load | °C | - | - | - | - | - | - | - |
| | Scratch hardness | - | F | F | F | F | HB | F | F |

### [Table 6]

**Table 6**

| | | | Example 2-1 | Comparative Example 2-1 |
|---|---|---|---|---|
| PC-POS copolymer (A) | PC-POS 2-1 | Part(s) by mass | 100.0 | - |
| | PC-POS 2-2 | | - | 100.0 |
| Light resistance agent | LA-77Y | | 0.1 | 0.1 |
| | KEMISORB 79 | | - | - |
| Effect pigment particle | MC5090PS | | - | - |
| | NJ-80 | | - | - |
| Colorant | Mixed colorant | | - | - |
| Elastomer | M-590 | | - | - |
| Evaluation result | Charpy impact strength (4 mmt, with notch, -20°C) | kJ/m² | - | - |
| | Charpy impact strength (4 mmt, with notch, -10°C) | kJ/m² | - | - |
| | Charpy impact strength (4 mmt, with notch, room temperature) | kJ/m² | 45 | 30 |
| | Deflection temperature under load | °C | - | - |
| | Scratch hardness | - | H | F |

### [Table 7]

**Table 7**

| | | | Example 3-1 | Example 3-2 | Comparative Example 3-1 | Example 3-3 | Example 3-4 | Comparative Example 3-2 |
|---|---|---|---|---|---|---|---|---|
| PC-POS copolymer (A) | PC-POS 3-1 | Part(s) by mass | 100.0 | - | - | 100.0 | - | - |
| | PC-POS 3-2 | | - | 100.0 | - | - | 100.0 | - |
| | PC-POS 3-3 | | - | - | 100.0 | - | - | 100.0 |
| Light resistance agent | LA-77Y | | 0.1 | 0.1 | 0.1 | - | - | - |
| | KEMISORB 79 | | - | - | - | - | - | - |
| Effect pigment particle | MC5090PS | | - | - | - | 1.5 | 1.5 | 1.5 |
| | NJ-80 | | - | - | - | - | - | - |
| Colorant | Mixed colorant | | - | - | - | - | - | - |
| Elastomer | M-590 | | - | - | - | - | - | - |
| Evaluation result | Charpy impact strength (4 mmt, with notch, -20°C) | kJ/m² | - | - | - | - | - | - |
| | Charpy impact strength (4 mmt, with notch, -10°C) | kJ/m² | - | - | - | - | - | - |
| | Charpy impact strength (4 mmt, with notch, room temperature) | kJ/m² | 27 | 18 | 11 | 13 | 13 | 11 |
| | Deflection temperature under load | °C | - | - | - | - | - | - |
| | Scratch hardness | - | F | HB | HB | H | F | HB |

### [Table 8]

**Table 8**

| | | | Example 3-5 | Example 3-6 | Comparative Example 3-3 | Example 3-7 | Comparative Example 3-4 |
|---|---|---|---|---|---|---|---|
| PC-POS copolymer (A) | PC-POS 3-1 | Part(s) by mass | 100.0 | - | - | - | - |
| | PC-POS 3-2 | | - | 100.0 | - | 100.0 | - |
| | PC-POS 3-3 | | - | - | 100.0 | - | 100.0 |
| Light resistance agent | LA-77Y | | - | - | - | - | - |
| | KEMISORB 79 | | - | - | - | - | - |
| Effect pigment particle | MC5090PS | | - | - | - | - | - |
| | NJ-80 | | - | - | - | 0.5 | 0.5 |
| Colorant | Mixed colorant | | 0.1 | 0.1 | 0.1 | - | - |
| Elastomer | M-590 | | - | - | - | - | - |
| Evaluation result | Charpy impact strength (4 mmt, with notch, -20°C) | kJ/m² | - | - | - | - | - |
| | Charpy impact strength (4 mmt, with notch, -10°C) | kJ/m² | - | - | - | - | - |
| | Charpy impact strength (4 mmt, with notch, room temperature) | kJ/m² | 21 | 19 | 10 | 15 | 11 |
| | Deflection temperature under load | °C | - | - | - | - | - |
| | Scratch hardness | - | F | HB | HB | F | HB |

As shown in Tables 4 to 8, it was found that the polycarbonate-based resin compositions of Examples were each superior in balance between its impact resistance and scratch resistance to the polycarbonate-based resin composition of Comparative Example to which any of the light resistance agent, the effect pigment particle, the colorant, and the elastomer included therein corresponded.

## Claims

1. A polycarbonate-based resin composition, comprising:
a polycarbonate-based resin (S) comprising a polycarbonate-polyorganosiloxane copolymer (A); and
at least one kind selected from the group consisting of: a light resistance agent; an elastomer; a colorant; an effect pigment particle; an inorganic filler; a flame retardant; and an acrylic resin,
wherein the polycarbonate-based resin (S) comprises a polycarbonate block comprising a structural unit (A-1) represented by the following formula (1) and a polyorganosiloxane block comprising a repeating structure (A-2) of a structure represented by the following formula (XX),
wherein a content of the structural unit (A-1) represented by the formula (1) in the polycarbonate-based resin (S) is 78.0 mass% or more, and
wherein a content of a structural unit represented by the following formula (XX) in the polycarbonate-based resin (S) is 2.0 mass% or more and 25.0 mass% or less: 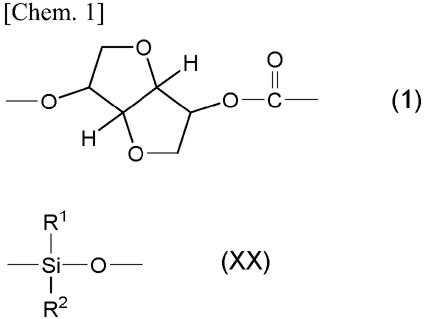
wherein
in the formula (XX), R¹ and R² each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms.

2. The polycarbonate-based resin composition according to claim 1, wherein the polycarbonate-based resin (S) further comprises at least one structural unit (A-3) selected from structures represented by the following formulae (3) and (4): 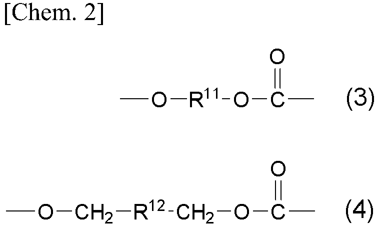 wherein
in the formulae (3) and (4), R¹¹ represents a divalent linear or branched aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and R¹² represents a divalent alicyclic hydrocarbon group having 3 to 40 carbon atoms.

3. The polycarbonate-based resin composition according to claim 2, wherein the structural unit (A-3) comprises at least one selected from structural units (A-31) to (A-34) represented by the following formulae (31) to (34): 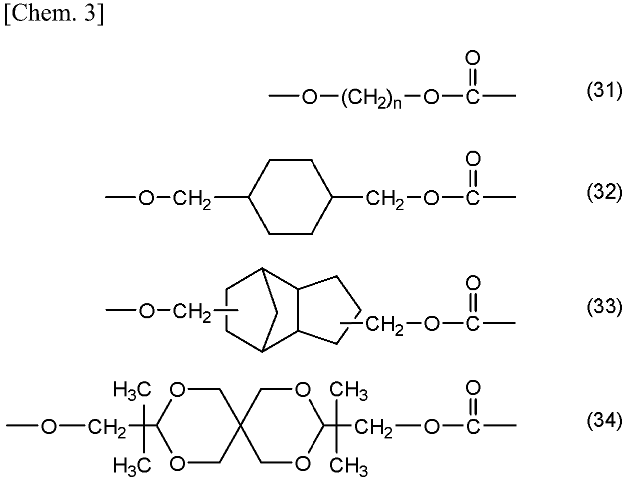 wherein
in the formula (31), "n" represents an integer of from 2 to 18.

4. The polycarbonate-based resin composition according to any one of claims 1 to 3, wherein the R¹ and the R² each represent a methyl group.

5. The polycarbonate-based resin composition according to any one of claims 1 to 4, wherein the light resistance agent comprises at least one kind selected from the group consisting of: a benzotriazole-based UV absorber; a benzoxazinone-based UV absorber; a salicylate-based UV absorber; a malonic acid ester-based UV absorber; an oxalylanilide-based UV absorber; a triazine-based UV absorber; a benzophenone-based UV absorber; a cyanoacrylate-based UV absorber; and an amine-based light resistance stabilizer.

6. The polycarbonate-based resin composition according to any one of claims 1 to 4, wherein the elastomer comprises at least one kind selected from the group consisting of: a rubbery graft polymer; and a rubbery graft polymer latex.

7. The polycarbonate-based resin composition according to any one of claims 1 to 4, wherein the colorant comprises at least one kind selected from the group consisting of: an inorganic pigment; an organic pigment; and an organic dye.

8. The polycarbonate-based resin composition according to any one of claims 1 to 4, wherein the effect pigment particle comprises at least one kind selected from the group consisting of particles obtained by coating, with a metal or a metal oxide, at least one kind selected from the group consisting of: a metal particle; and a light interference pigment.

9. The polycarbonate-based resin composition according to any one of claims 1 to 4, wherein the inorganic filler comprises at least one kind selected from a glass filler, silica, and a carbon fiber.

10. The polycarbonate-based resin composition according to any one of claims 1 to 4, wherein the flame retardant comprises at least one kind selected from the group consisting of: a phosphorus-based flame retardant; and a metal salt-based flame retardant.

11. The polycarbonate-based resin composition according to any one of claims 1 to 4, wherein the acrylic resin comprises at least one kind selected from the group consisting of (co)polymers of a monomer selected from the group consisting of: acrylic acid; methacrylic acid; an acrylic acid ester; a methacrylic acid ester; acrylonitrile; and methacrylonitrile.

12. A molded article of the polycarbonate-based resin composition of any one of claims 1 to 11.
